(19) Europäisches Patentamt
European Patent Office
Office européen des brevets

(11) **EP 2 651 194 B1**

(12) **EUROPÄISCHE PATENTSCHRIFT**

(45) Veröffentlichungstag und Bekanntmachung des Hinweises auf die Patenterteilung:
**03.06.2020 Patentblatt 2020/23**

(21) Anmeldenummer: **13162997.4**

(22) Anmeldetag: **09.04.2013**

(51) Int Cl.:
*H05B 37/02* (2006.01)        *G01S 7/28* (2006.01)
*G01S 13/38* (2006.01)        *G01S 13/56* (2006.01)
*G01S 13/86* (2006.01)

(54) **Außensensorvorrichtung sowie Bewegungssensor-gesteuerte Außenleuchte**

External sensor device and movement sensor controlled external light

Dispositif de détection extérieur et lampe extérieure commandée par un détecteur de mouvements

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.04.2012 DE 102012103177**

(43) Veröffentlichungstag der Anmeldung:
**16.10.2013 Patentblatt 2013/42**

(73) Patentinhaber: **Steinel GmbH**
**33442 Herzebrock (DE)**

(72) Erfinder: **Steinel, Ingo Heinrich**
**33442 Herzebrock-Clarholz (DE)**

(74) Vertreter: **Müller Hoffmann & Partner**
**Patentanwälte mbB**
**St.-Martin-Strasse 58**
**81541 München (DE)**

(56) Entgegenhaltungen:
**WO-A1-2012/023087        US-A1- 2010 103 020**
**US-A1- 2010 109 934        US-A1- 2010 201 518**

EP 2 651 194 B1

## Beschreibung

Die vorliegende Erfindung betrifft eine Außensensorvorrichtung nach dem Oberbegriff des Patentanspruchs 1. Ferner betrifft die vorliegende Erfindung eine Bewegungssensor-gesteuerte Außenleuchte unter Verwendung einer derartigen Außensensorvorrichtung.

Aus dem Stand der Technik ist es bekannt, Sensoren zur Bewegungserfassung in Form verschiedener Erfassungstechnologien und -prinzipien einzusetzen. So ist es etwa zur Bewegungserfassung im Innen- und Außenbereich (bezogen auf ein Gebäude) bekannt und etabliert, zur Beleuchtungssteuerung sog. PIR-(Passiv-Infrarot-) Sensoren einzusetzen, welche auf der Basis detektierter Infrarotstrahlung im Erfassungsbereich (genauer: einer sich durch die Bewegung des zu detektierenden Erfassungsobjekts ändernden Infrarotstrahlung im Bild des Erfassungsbereichs) ein Erfassungssignal zu erzeugen und als Reaktion darauf typischerweise eine Leuchtenvorrichtung zu aktivieren. Derartige Vorrichtungen sind insbesondere in Kombination einer Außensensorvorrichtung mit einer Leuchtenvorrichtung als sog. Sensorleuchten etabliert und weit verbreitet, nicht zuletzt aufgrund ihrer robusten, auch für einen Einsatz unter Witterungsbedingungen geeigneten Konstruktion.

Allerdings besitzen derartige, auf dem Infrarotprinzip basierende Vorrichtungen auch Nachteile; so ist zunächst ein wirksamer Erfassungsbereich, d.h. ein durch einen maximalen Abstand eines zuverlässig zu detektierenden Erfassungsobjekts einer bestimmten Mindestgröße bestimmter Bereich, prinzipbedingt begrenzt. Zusätzlich sind infrarotbasierte Sensoren gegenüber Umwelteinflüssen, etwa Änderungen in den Temperatur- und/oder Lichtverhältnissen, beeinflussbar und führen zu potentiell unerwünschten Fehlaktivierungen der Leuchtenvorrichtung.

Insbesondere mit dem Zweck einer Beleuchtungssteuerung etablieren sich als Alternative zur PIR-Sensorik zunehmend Hochfrequenz- bzw. Radarsensoren, welche auf der Basis einer Änderung reflektierter und detektierter Hochfrequenzwellen arbeiten und zu diesem Zweck üblicherweise das DopplerPrinzip ausnutzen, d.h. eine durch eine Bewegung (bzw. Bewegungsgeschwindigkeit) eines zu detektierenden Erfassungsobjekts im Erfassungsbereich bewirkte und zur Detektion ausgewertete Frequenzverschiebung des Hochfrequenzsignals.

Allerdings ist auch eine solche Hochfrequenztechnologie - prinzipbedingt - mit Nachteilen behaftet, so ist etwa eine Detektorempfindlichkeit (und damit auch eine Bewegungserfassungsempfindlichkeit) etwa davon abhängig, in welcher (Bewegungs-) Richtung sich das Erfassungsobjekt relativ zum Sensor bewegt: Eine Objektbewegung in Richtung auf den Sensor zu bzw. radial von diesem sich entfernend bewirkt etwa ein völlig anderes Dopplersignal als etwa ein sich tangential im Erfassungsbereich bewegendes Objekt. Gleichermaßen Probleme macht etwa ein durch einen Sensor nur schwer detektierbarer Unterschied zwischen einem relativ kleinen, sich in der Nähe des Sensors bewegenden Erfassungsobjekt im Vergleich zu einem relativ großen, in weiterer Entfernung (und potentiell sogar außerhalb eines gewünschten Erfassungsbereichs) sich bewegenden Objekt. Schließlich führt die bei Hochfrequenzsignalen vorliegende Eigenschaft, Materialien zu durchdringen, zu unerwünschten Eigenschaften eines Bewegungssensors, ggf. auch auf Bewegungen zu reagieren, welches sich hinter einer Wand oder dergleichen Absperrung ohne jegliche Relevanz für einen Detektionszweck ereignen.

Aus der US 2010/0103020 A1 ist ein Bewegungsdetektor bekannt, der die Reflexion von vom Bewegungsdetektor ausgesandten Mikrowellen an einem Objekt erfasst und daraus eine Position des Objekts ableitet. Wenn sich das Objekt in einem vorgegebenen Bereich befindet, wird ein Alarm ausgelöst.

Aus der WO 2012/023087 A1 ist bekannt, mittels Radar über den Dopplereffekt zu erfassen, ob sich ein sich bewegendes Objekt in einem überwachten Bereich befindet. Das Erfassen einer Bewegung führt zur Aktivierung einer Lampe.

Während insbesondere in einem (Gebäude-) Innenbereich diese Besonderheiten der Radar- bzw. Hochfrequenztechnologie bei der Bewegungserfassung relativ gut beherrschbar sind und dementsprechend zu einer zunehmenden Verbreitung dieser Erfassungstechnologie, gerade im Bereich der Beleuchtungssteuerung und Hausautomation, führen, ist insbesondere der (Gebäude-) Außenbereich nach wie vor problematisch, nicht zuletzt durch einen potentiell unbegrenzten Erfassungsbereich (theoretisch könnten etwa im Fernbereich stehende, sich im Wind bewegende Bäume ein eine Sensorreaktion auslösendes Dopplersignal bewirken).

Aufgabe der vorliegenden Erfindung ist es daher, eine Außensensorvorrichtung zur bewegungsgesteuerten Aktivierung einer Leuchtenvorrichtung nach dem Oberbegriff des Hauptanspruchs zu schaffen, welche im Hinblick auf ihre Eignung für einen Gebäudeaußenbereich optimiert ist, dabei insbesondere einen (gegenüber üblichen PIR-Sensoren) erweiterten Erfassungsbereich ermöglicht, gleichzeitig besonders günstig für die Bewegungserfassung von Personen ist, unabhängig von deren Bewegungsrichtung und -geschwindigkeit relativ zur Außensensorvorrichtung, dabei insbesondere unempfindlich gegenüber Störungen und Bewegungen von nicht zu detektierenden Objekten oder Artefakten ist.

Die Aufgabe wird durch die Außensensorvorrichtung mit den Merkmalen der unabhängigen Patentansprüche gelöst. Vorteilhafte Weiterbildungen der Erfindung sind in den Unteransprüchen beschrieben.

Schutz im Rahmen der vorliegenden Erfindung wird gleichermaßen beansprucht für eine Bewegungssensorgesteuerte Außenleuchte, welche mit der erfindungsgemäßen Außensensorvorrichtung realisiert ist und insoweit eine bevorzugte Verwendung derselben darstellt. Als zur Erfindung gehörig offenbart gelten zudem jegliche Verfahrensaspekte, welche sich aus einem Betrieb und/oder Datensignalverarbeitungsoperationen der vorliegenden Vorrichtung ergeben.

In vorteilhafter Weise ist die nach dem Dopplerprinzip realisierte Hochfrequenz-Bewegungserfassung mithilfe eines Paares von Hochfrequenz-Empfangseinheiten, jeweils bestehend aus einer Antenne, einer zugehörigen Mischereinheit und einem zugehörigen Zwischenfrequenz-Abgriff, realisiert, so dass in Abkehr von gattungsbildenden Einzel-Technologien zwei zur weiteren Auswertung in Form digitaler Signalverarbeitung vorliegende Detektor-Empfangskanäle existieren, welche aufgrund ihrer erfindungsgemäßen Geometrie - beabstandet um einen vorbestimmten und bekannten Abstand - in für die Hochfrequenz-Leuchtensteuerung erstmals genutzten Weise eine konkrete Lokalisierung des Erfassungsobjekts im (für die Hochfrequenz-Empfangsantennen gemeinsamen) Empfangsbereich ermöglichen.

Konkret gestatten es die durch die geometrischen Verhältnisse der Anordnung bzw. des Abstands, ferner das gewählte Frequenzband für die Doppler-Hochfrequenzdetektormittel, eine (bevorzugt rechteckförmige) Modulation des Hochfrequenz-Sendesignals bestimmten hochfrequenzmäßigen Randbedingungen, das in Form des ersten und zweiten Zwischenfrequenzsignals erhaltene Reflektionssignal aus dem Erfassungsbereich durch die digitale Signalverarbeitung auszuwerten auf Eigenschaften des sich im Erfassungsbereich befindlichen bzw. bewegenden Erfassungsobjekts, insbesondere einen Abstand des Erfassungsobjekts von dem Gehäuse der Sensorvorrichtung, ferner eine Abstandsänderung (Änderungsgeschwindigkeit) dieses Abstands, ferner einen Winkel (sog. Azimutwinkel) des Erfassungsobjekts in seiner Bewegungsebene (im praktischen Betrieb typischerweise entsprechend einer Bodenoberfläche eines Erdbodens), sowie einer Winkelgeschwindigkeit entsprechend einer Winkeländerung dieses Azimutwinkels.

Aus diesen insbesondere aus dem Phasenversatz des ersten und des zweiten Zwischenfrequenzsignals hergeleiteten Daten bestimmt dann die erfindungsgemäß eingerichtete Steuereinheit, ob die Aktivierung der Leuchtenvorrichtung, also die vorgesehene Betriebsmodusänderung, ausgelöst wird. Typischerweise und vorteilhaft im Rahmen der vorliegenden Erfindung geschieht dies dadurch, dass, entsprechend dem Bewegungsverhalten eines Menschen im Erfassungsbereich, das Abstandssignal das Erfassungsobjekt dem gewünschten Abstandsbereich zuordnet, typischerweise verknüpft mit dem Abstandsänderungssignal, welches einer Bewegungsgeschwindigkeit des Erfassungsobjekts entsprechend eingerichtet ist. Um insoweit sowohl radiale (d.h. in Richtung auf bzw. weg vom Sensorgehäuse) gerichtete Bewegungen, als auch tangential dazu erfolgende Bewegungen zu erfassen, wird zusätzlich das Winkeländerungssignal ausgewertet und aus einer geeigneten Verknüpfung dieser Signale dann auf eine detektionsrelevante Bewegung des Erfassungsobjekts geschlossen, welche dann in der erfindungsgemäßen Weise die Leuchtenvorrichtung aktiviert.

Damit ist in erfindungsgemäß vorteilhafter Weise zunächst der Nachteil bekannter, zur Bewegungserfassung genutzter Doppler-Vorrichtungen überwunden, eine Richtungsabhängigkeit in der Erfassungsqualität aufzuweisen. Zusätzlich ermöglicht die vorliegende Erfindung eine Begrenzung des Erfassungsbereichs sowohl im Nahbereich, als auch im Hinblick auf eine entfernte Grenze des Erfassungsbereichs. Gleichermaßen kann es im Rahmen bevorzugter Ausführungsbeispiele der Erfindung vorteilhaft sein, bereits als Reaktion auf eine Erfassung in einem Nahbereich unmittelbar vor der Sensoreinheit eine Aktivierung der Leuchtenvorrichtung vorzunehmen.

Im Rahmen der Erfindung wird unabhängiger Schutz beantragt für eine Außensensorvorrichtung nach den unabhängigen Patentansprüchen 10 bzw. 11. Im Rahmen der Erfindung hat es sich als vorteilhaft herausgestellt, auch alternativ zueinander das Abstandssignal sowie das Abstandsänderungssignal einerseits und das Winkelsignal bzw. das Winkeländerungssignal andererseits zu erzeugen und entsprechend vorbestimmte Grenzen bzw. Veränderungsparameter dieser Signale isoliert zum Aktivieren der elektrischen Vorrichtung, insbesondere der Leuchtenvorrichtung, einzusetzen. Diesem liegt die Erkenntnis zugrunde, dass es entsprechend einem jeweiligen Einsatzkontext ausreichend sein kann, lediglich das Abstandssignal bzw. dessen Änderung zu erfassen und diese Auswertung zugängig zu machen, oder es kann in einem anderen Einsatzkontext sinnvoll und ausreichend sein, lediglich das Winkelsignal bzw. das Winkeländerungssignal für die gewünschte Aktivierungsfunktionalität auszuwerten.

Diese erfindungsgemäßen Varianten, welche insoweit speziellere Ausbildungen des generellen Lösungsprinzips gemäß Hauptanspruch darstellen, benötigen im Hinblick auf die isolierte Abstandserfassung bzw. Abstandsänderungserfassung nicht das Hochfrequenz-Detektorpaar mit den mindestens zwei um den vorbestimmten Abstand ausgerichteten HF-Empfangsantennen samt jeweils zugeordneten Mischern, vielmehr ist es hierfür ausreichend, eine HF-Antenne samt zugeordnetem Mischer vorzusehen, wobei es hier für die Realisierung der Erfindung vorteilhaft ist (wie auch im Fall des Hauptanspruchs) das den Mischermitteln zugeführte Oszillatorsignal zu modulieren, dergestalt, dass (etwa in Rechteckform) abwechselnd zwei (einander frequenzmäßig benachbarte, etwa um weniger als 1% in der Frequenz abweichende, gleichwohl unterschiedliche) Mischerfrequenzen lokal erzeugt und für die Modulation verwendet werden. Aus einer solchen Anordnung lässt dann wiederum mittels der erfindungsgemäß den Mischermitteln nachgeschalteten Signalverarbeitungseinheit das Abstandssignal bzw. Abstandsänderungssignal erzeugen und für die nachgeschaltete Auswertung und Steuerung bereitstellen.

Allen Lösungsvarianten ist gemeinsam, dass in erfindungsgemäß vorteilhafter Weise Erfassungsgrenzen bestimmbar- und auswertbar sind, die, zur Lösung der eingangs gestellten Aufgabe, die Nachteile herkömmlicher Technologien überwinden.

Durch diese erfindungsgemäßen Konzept- und Prinzipvorteile ist damit die vorliegende Erfindung besonders geeignet, mit dem Gehäuse an Wänden oder Decken (etwa Überhängen) im Außenbereich montiert zu werden, so dass sich die vorliegende Erfindung in herausragender Weise als Ersatz für bekannte Sensorleuchteneinheiten eignet. Dabei ist es insbesondere bevorzugt, die zugehörige Leuchtenvorrichtung in ein gemeinsames Gehäuse zu integrieren bzw. modular eine Verbindung zu ermöglichen; gleichwohl lässt sich die vorliegende Erfindung auch vorteilhaft nutzen, indem die Außensensorvorrichtung separat von der Leuchtenvorrichtung montiert und betrieben wird. Wiederum vorteilhaft lassen sich beliebige, insbesondere auch drahtlos durch geeignete Funk- oder andere Verbindungsmittel verkoppelbare Anordnungen aus einer Mehrzahl von Leuchtenvorrichtungen realisieren, welche von einer einzelnen (oder wiederum einer Mehrzahl von) Außensensorvorrichtung(en) in der erfindungsgemäßen Weise aktiviert werden, so dass maximale Flexibilität im Einsatz und für verschiedenste Außenbereiche geschaffen ist.

Insbesondere bei einer Realisierung zur Wandmontage ist es im Rahmen weiterer Realisierungsformen der Erfindung bevorzugt, die integrierte Leuchtenvorrichtung mit einer Mehrzahl von Lichtaustrittsflächen auszugestalten, welche etwa einander gegenüberliegend am oder im gemeinsamen Gehäuse ausgebildet sein können. Auf diese Weise ist es etwa günstig und bevorzugt, in der Art einer kombinierten Außen- und Hausnummernleuchte einen sowohl abwärts als auch aufwärts, bezogen auf eine Bodenfläche, gerichteten Lichtaustritt zu ermöglichen, während bevorzugt etwa dann der durch das Antennenpaar bestimmte Erfassungsbereich nach vorn, d.h. sich horizontal von der betreffenden Montagewand erstreckend, ausgerichtet ist. Auch hier sind die Möglichkeiten der konstruktiven Ausgestaltung vielfältig und lassen sich an nahezu beliebige Einsatzzwecke und Steuer- sowie Beleuchtungsaufgaben anpassen.

In der für einen Betrieb im Außenbereich besonders bevorzugten Weise sind gemäß einer weiteren Ausführungsform der Erfindung der Außensensorvorrichtung Mittel zur Tageszeit- und/oder Umgebungshelligkeitserfassung zugeordnet. Diese ermöglichen es beispielsweise, das Aktivierungs- und/oder Betriebsmodusänderungsverhalten durch die Steuereinheit abhängig zu machen von Einflüssen der Umgebungshelligkeit bzw. einer aktuellen Tageszeit: So kann etwa während einer Mittagszeit und/oder zu besonders hellen Umgebungshelligkeitsbedingungen das Aktivieren der Leuchtenvorrichtung unterbunden werden, selbst wenn durch die Hochfrequenzdetektormittel im Erfassungsbereich eine relevante Bewegung erfasst wird. Umgekehrt kann etwa zu gewissen Nachtzeiten eine Daueraktivierung der Leuchtenvorrichtung, ggf. mit reduzierter Lichtleistung, vorgegeben werden, welche weiter bevorzugt dann etwa als Reaktion auf eine detektierte Bewegung die Lichtleistung erhöht. Wiederum weiterbildungsgemäß kann, zur Verhinderung einer nachteiligen Beeinflussung eines durch die Leuchtenvorrichtung bewirkten Eigenlichts, dieses Eigenlicht dann beim Erfassungsbetrieb der Mittel zur Umgebungshelligkeit ausgeglichen bzw. kompensiert werden.

Besonders bevorzugt ist es im Rahmen günstiger Weiterbildungen der Erfindung zudem, die Steuereinheit nicht nur zur bewegungsabhängigen Aktivierung bzw. Betriebsmodusänderung der Leuchtenvorrichtung zu nutzen, sondern zusätzlich und synergistisch die Temperatur der Leuchtenvorrichtung zu überwachen und ggf. als Reaktion auf eine detektierte Schwellwerterreichung oder ein anderes detektiertes Temperaturverhalten zu beeinflussen. Exemplarisch könnte dies etwa dadurch realisiert sein, dass vorteilhaft und weiterbildungsgemäß eine relevante Gehäusetemperatur der mittels LEDs realisierten Leuchtenvorrichtung (bei welcher dann eine zu hohe Betriebstemperatur von Leistungs-LEDs zu einer unerwünschten Lebensdauerverkürzung führen würde) erfasst wird und als Reaktion auf das Erreichen oder Überschreiten einer Temperaturschwelle dann eine Steuerleistung für die LED-Leuchtmittel abgesenkt wird, bis eine gewünschte Zieltemperatur wieder erreicht ist. Auch dieser Gedanke lässt sich erfindungsgemäß weiterbildend auf verschiedene andere Leuchtenkonstellationen bzw. Leuchtmittelvarianten übertragen, etwa besonders stark wärmeerzeugende (und damit potentiell brandgefährdende) Halogen-Leuchtmittel.

Nicht zuletzt mit der Absicht, am Einsatzort bzw. im montierten Zustand der erfindungsgemäßen Außensensorvorrichtung eine besonders einfache und komfortable Einrichtung, Einstellung bzw. Änderung von Erfassungsbereich und anderen betriebsrelevanten Parametern zu ermöglichen, sind weiterbildungsgemäß Einrichte- bzw. Konfigurationsmittel, weiter bevorzugt drahtlos, etwa in Form einer Fernsteuerung angebunden, vorgesehen.

Im Ergebnis ermöglicht somit die vorliegende Erfindung das Realisieren einer Bewegungsdetektionsinfrastruktur für den Außenbereich, welche in herausragender Weise zur Bewegungserfassung und bewegungsabhängigen Aktivierung von Leuchtenvorrichtungen und auch anderer elektrischer Verbraucher geeignet ist. Gleichzeitig ist ein möglicher Einsatz im Innenbereich durch die vorliegende Erfindung nicht ausgeschlossen und gleichermaßen als zur Erfindung gehörig beansprucht.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in

Fig. 1     ein schematisches Blockschaltbild der Außensensorvorrichtung gemäß einer ersten bevorzugten Ausführungsform der vorliegenden Erfindung zur Steuerung einer Leuchtenvorrichtung als integrierte Sensorleuchte;

Fig. 2     eine Detailansicht der Doppler-Hochfrequenzeinheit im Ausführungsbeispiel der Fig. 1;

Fig. 3    eine Detaildarstellung von wesentlichen Funktionskomponenten der Signalverarbeitungseinheit im Ausführungsbeispiel der Fig. 1;

Fig. 4:    eine Geometriedarstellung zum Verdeutlichen wesentlicher geometrischer und Parameterverhältnisse im Ausführungsbeispiel der Fig. 1 bis 3, bezogen auf eine Bewegungsebene, zusammen mit dem Beschreibungsanhang;

Fig. 5,6:    Darstellungen analog Fig. 2, Fig. 3 einer zweiten Ausführungsform der Erfindung und

Fig. 7-9:    Darstellungen analog Fig. 2 bis Fig. 4 einer dritten Ausführungsform der Erfindung.

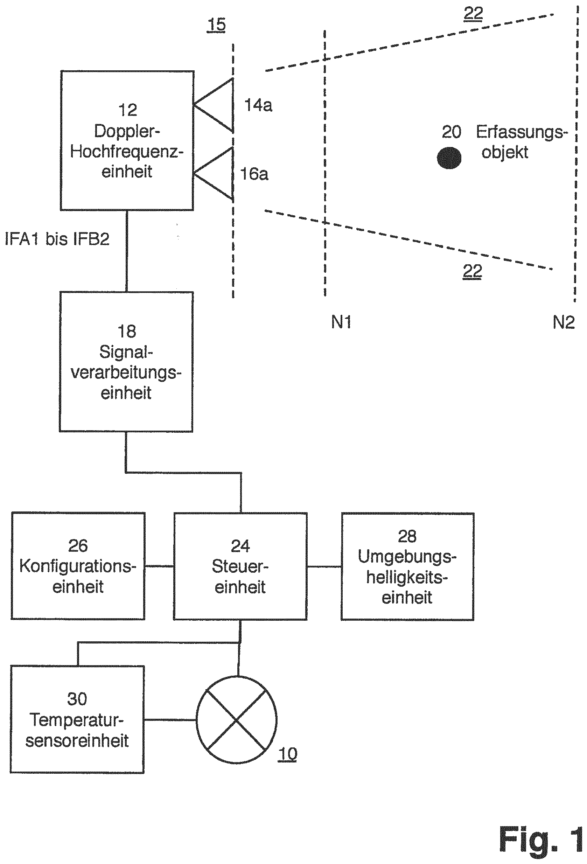

Das schematische Blockschaltbild der Fig. 1 verdeutlicht die wesentlichen Funktionskomponenten eines ersten Ausführungsbeispiels zur Realisierung der erfindungsgemäßen Außensensorvorrichtung. Dieser ist als Leuchtenvorrichtung eine symbolisch dargestellte LED-Anordnung, aufweisend eine Mehrzahl von Leistungs-LED-Leuchtmitteln, zugeordnet.

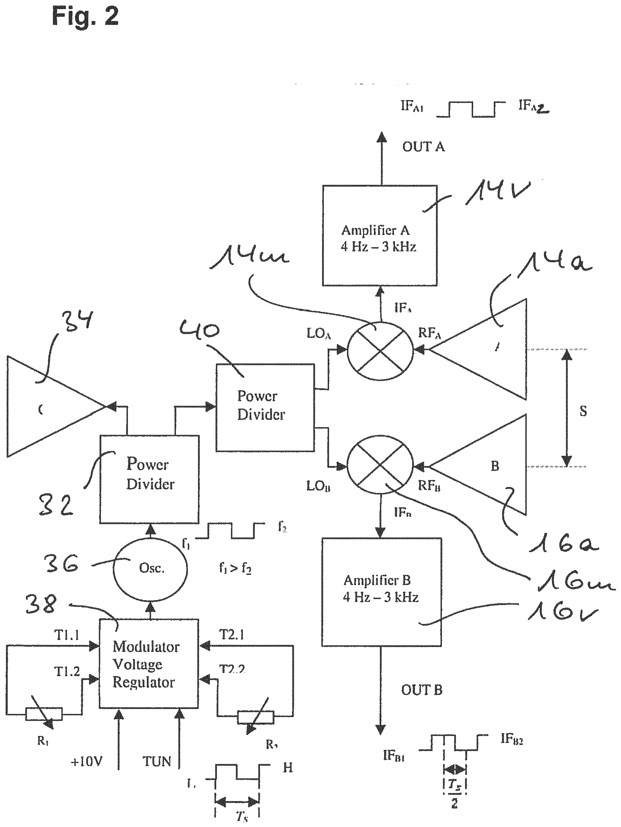

Wie die Fig. 1 verdeutlicht, weist das gezeigte Ausführungsbeispiel eine Doppler-Hochfrequenzeinheit 12 mit einem Paar von Hochfrequenz-Eingangsteilen 14, 16 auf, jeweils bestehend aus einer geeignet ausgebildeten Hochfrequenz-Antenne 14a bzw. 16a, einer nachgeschalteten zugehörigen Mischereinheit 14m bzw. 16m (Fig. 2) sowie dieser wiederum auf der Zwischenfrequenz (IF-) Seite ein geeigneter Zwischenverstärker 14v bzw. 16v.

Die Doppler-Hochfrequenzeinheit 12 gibt an eine nachgeschaltete Signalverarbeitungseinheit 18 die aufbereiteten Zwischenfrequenzsignale des ersten (14) bzw. zweiten (16) Hochfrequenzkanals, wobei sowohl das erste Zwischenfrequenzsignal $IF_A$ in Form von zwei in der Frequenz unterschiedlichen Signalen $IF_{A1}$ sowie $IF_{A2}$, als auch das zweite Zwischenfrequenzsignal in Form von zwei Signalen $IF_{B1}$ bzw. $IF_{B2}$ vorliegt.

Aus diesen (analogen) Zwischenfrequenzsignalen erzeugt die Signalverarbeitungseinheit 18 in nachstehend im Detail sowie unter Bezug auf den Beschreibungsanhang zu erläuternder Weise insgesamt vier Detektor- bzw. Erfassungsgrößen eines Objekts 20 im (gemeinsamen) Erfassungsbereich 22 (die Fig. 1 zeigt insoweit eine schematische Begrenzung) der Hochfrequenz-Empfangsantennen 14a bzw. 16a: Zum einen werden einer der Signalverarbeitungseinheit 18 nachgeschalteten Steuereinheit 24 Abstandsdaten des Objekts 20 bezogen auf eine von beiden Empfangsantennen 14a, 16a bestimmte Aperturfläche 15 bereitgestellt, darüber hinaus eine aus einer zeitlichen Änderung dieser Abstandsdaten in der radialen Richtung gewonnene Geschwindigkeitsinformation des (radialen) Abstands, ferner Daten betreffend einen aktuell erfassten Azimutwinkel des Objekts 20 bezogen auf die Aperturfläche sowie betreffend eine zeitliche Änderung dieses Azimutwinkels (insoweit entsprechend einer Winkelgeschwindigkeit), wobei der Azimutwinkel bezogen auf eine Bewegungsebene des Objekts 20 (etwa einer Person), insoweit typischerweise etwa entsprechend einer Ebene parallel zur Boden- bzw. Erdoberfläche bei Wandmontage der in Fig. 1 schematisch gezeigten und in einem (nicht gezeigten) Gehäuse zusammen mit der Leuchtenvorrichtung aufgenommenen Außensensorvorrichtung.

Als Reaktion auf die von der digitalen Signalverarbeitungseinheit 18 empfangenen Datensignale veranlasst die Steuereinheit 24 eine Aktivierung der Leuchtenvorrichtung 10 nach Maßgabe einer vorbestimmten Konfiguration oder Parametrisierung (eingerichtet durch eine zugeordnete, etwa mittels einer Fernbedienung betätigbaren Konfigurationseinheit 26). So würde etwa im Rahmen einer typischen Konfiguration eine Aktivierung der Leuchtenvorrichtung 10 insbesondere dann durch die Steuereinheit 24 ausgelöst, wenn das Erfassungsobjekt 20 sich innerhalb eines durch in Fig. 1 schematisch gezeigte Begrenzungen N1 und N2 begrenzten Raumes befindet, insoweit berücksichtigend das (radiale) Abstandssignal aus der Signalverarbeitungseinheit 18. Zusätzlich berücksichtigt im gezeigten Ausführungsbeispiel die Steuereinheit 24 das von der Signalverarbeitungseinheit 18 erzeugte Abstandsänderungs- sowie das Winkelgeschwindigkeitssignal, um festzustellen, ob es sich tatsächlich bei dem Objekt 20 um eine sich mit einer typischen Bewegungsgeschwindigkeit bewegende Person handelt, in Abgrenzung etwa von anderen, sich im Außenbereich bewegenden Objekten (wie etwa Büschen od. dgl.). Werden entsprechend vorgegebene oder vorgebbare Bereiche dieser Daten erreicht, erfolgt durch die Steuereinheit 24 das Aktivieren der Leuchtenvorrichtung 10. Auch ist es in der konkreten Realisierung vorgesehen, mit Hilfe von geeigneten, manuell betätigbaren Einstellmitteln (etwa Regelwiderständen oder Trimmern) geeignete Parameter für eine solche Entscheidung einzustellen, gleichermaßen können mit diesen Reglern typische Grenzen bzw. Stellparameter betreffend eine Umgebungshelligkeit (s.o.), eine Leuchtzeitdauer im aktivierten Zustand od.dgl. eingestellt werden.

Zusätzlich und vorteilhaft ist der in Fig. 1 gezeigten Sensorleuchte eine Dämmerungsschaltungsfunktionalität, realisiert durch eine der Steuereinheit 24 zugeordnete Umgebungshelligkeitserfassungseinheit 28, zugeordnet. Mit einem geeigneten Helligkeitssensor wird durch die Einheit 28 eine Umgebungshelligkeit für die in Fig. 1 gezeigte Sensorleuchte ermittelt und als Schwellwert für die Steuerfunktion der Steuereinheit 24 bereitgestellt, dergestalt, dass (ggf. trotz positiver Feststellung einer Bewegung des Objekts 20 im Erfassungsbereich) eine Aktivierung der Leuchtenvorrichtung 10 unterbleibt, wenn helles Umgebungslicht die Aktivierung der Leuchtenvorrichtung 10 unnötig macht.

Zusätzlich weiterbildend ist der Steuereinheit 24 eine Temperatursensoreinheit 30 zugeordnet, welche über einen geeigneten Temperatursensor eine aktuelle Betriebstemperatur der LED-Leuchtenvorrichtung 10 überwacht und etwa als Reaktion auf das Überschreiten eines (lebensdauerkritischen) Temperaturschwellwerts der Leuchtenvorrichtung durch entsprechendes Zusammenwirken mit der Steuereinheit 24 veranlasst, dass zum Absenken der Temperatur eine reduzierte Ansteuerleistung der Leuchtenvorrichtung eingestellt wird. Insoweit kann, in synergistisch günstiger Weise, die typischerweise ohnehin zur Realisierung der Signalverarbeitungseinheit 18 sowie der Steuereinheit 24 verwendete Mikroprozessor- bzw. Mikrokontrollerinfrastruktur zur zusätzlichen Lebensdauererhöhung und Betriebsüberwachung der (LED-)Leuchtmittel in der Leuchtenvorrichtung 10 verwendet werden.

Die Fig. 2 verdeutlicht weitere konstruktive Details der Doppler-Hochfrequenzeinheit 12 in Fig. 1. Wie in Fig. 2 gezeigt, strahlt eine Hochfrequenzsendeantenne 34 (in Fig. 1 nicht gezeigt) das von einem Lokaloszillator 36 sowie einer nachgeschalteten Leistungsteilungsstufe 32 aufbereitete Sendesignal in den Erfassungsbereich 22 ab. Das Oszillatorsignal 36 ist zudem geeignet rechteckmoduliert durch eine vorgeschaltete Modulatoreinheit 38, zur Realisierung der jeweiligen Zwischenfrequenzmuster 1 bzw. 2. Das Lokaloszillatorsignal wird zudem über einen weiteren Leistungsteiler 40 in die kanalspezifischen Mischstufen 14b bzw. 16b eingekoppelt. So empfängt konkret ein Eingang TUN der Modulatoreinheit 38 ein rechteckmoduliertes Signal, welches für die Ausgänge OUT A bzw. OUT B eine entsprechende Umschaltung zwischen einer ersten Frequenz $f_1$ und einer zweiten Frequenz $f_2$, entsprechend dieser Rechteckmodulation der Periode Ts, bewirkt. Die (einander benachbarten) Frequenzen $f_1$ und $f_2$ können durch die gezeigten Trimmer $R_1$ bzw. $R_2$ eingeregelt werden. Die Periode $T_s$ beträgt im gezeigten Ausführungsbeispiel 1ms. Entsprechend der Rechteckmodulation, vgl. die Ausgangssignale des Misch- und Verstärkungsvorgangs der Kanäle A und B, entsteht in einer Halbperiode $T_2/2$ das Dopplersignal $U_{A1}$ bzw. $U_{A2}$, wie im Anhang in Tabelle 3.1 für die Zwischenfrequenzsignale $IF_{A1}$ bzw. $IF_{A2}$ beschrieben. Da die Frequenzen $f_1$ und $f_2$ nahe beieinanderliegen (und im praktischen Beispiel nur ca. 0,17 % auseinanderfallen) lässt sich, vgl. Formel 3.5, vereinfachend die Dopplerfrequenz gleich betrachten.

Die Phase des modulierten Dopplersignals $IF_{A1}$ hängt, wie gezeigt, von dem Abstand $R_A$ des Ziels von der Antenne 14a sowie von der Frequenz $f_1$ ab, dagegen hängt die Phase des Dopplersignals $IF_{A2}$ von $R_A$ und $f_2$ ab. Entsprechend lässt sich aus dem Unterschied der Phasen der Signale $IF_{A1}$ und $IF_{A2}$ der Abstand $R_A$ des Ziels bestimmen (Formel 3.15). In analoger Weise wird für die Mischstufe 16m mit den Dopplersignalen $U_{B1}$ und $U_{B2}$ verfahren, entsprechend der zugehörigen Zwischenfrequenzsignale $IF_{B1}$ bzw. $IF_{B2}$.

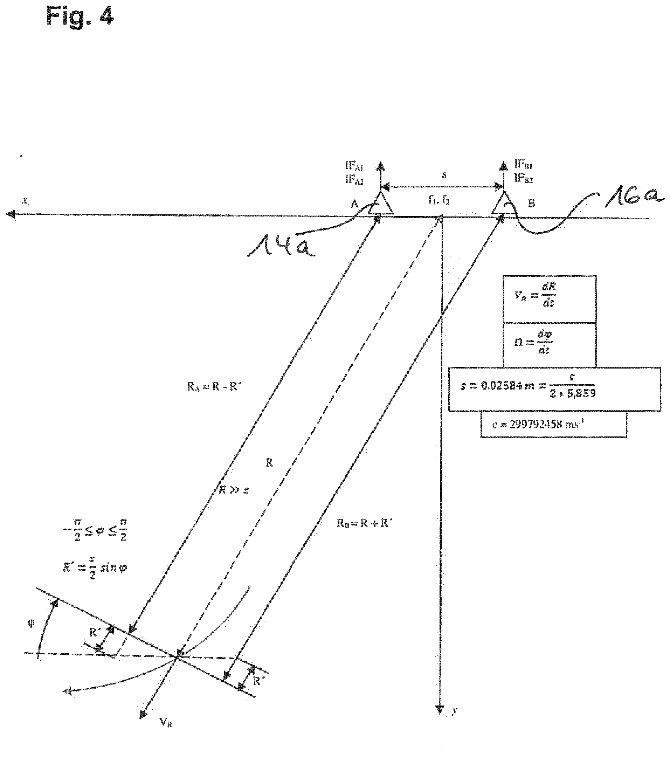

Aus dem Unterschied der Phasen der Signale $IF_{A1}$ und $IF_{B1}$ oder $IF_{A2}$ und $IF_{B2}$ lässt sich dagegen der Azimutwinkel (Fig. 4) des Ziels bestimmen, siehe die Formeln 3.8 und 3.9.

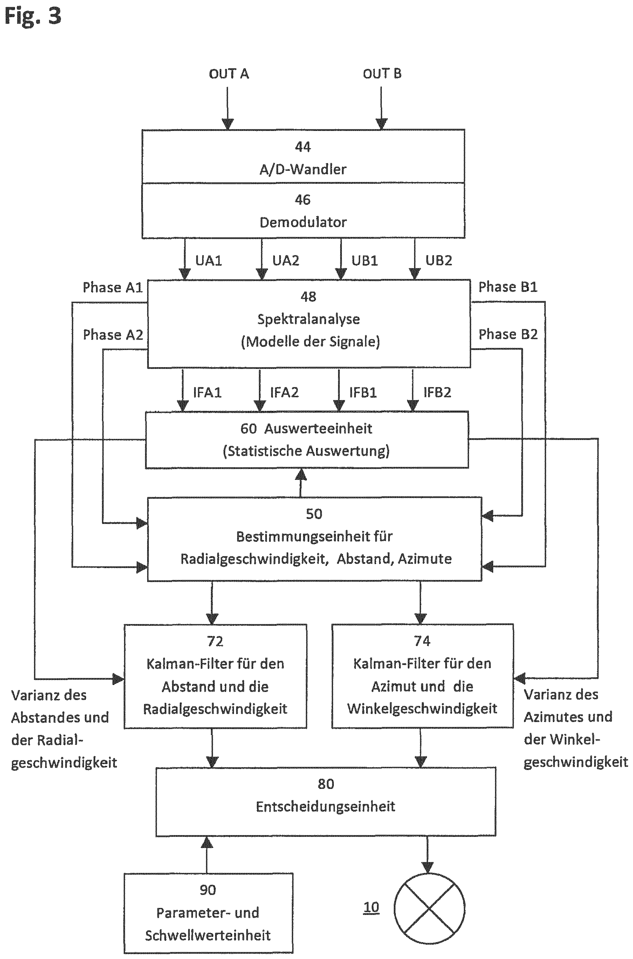

Die Fig. 2 verdeutlicht entsprechend die jeweilige Aufbereitung bzw. Zusammensetzung der Zwischenfrequenzsignale $IF_{A1}$ und $IF_{A2}$ für den ersten Kanal sowie $IF_{B1}$ bzw. $IF_{B2}$ für den zweiten Empfangskanal. Gezeigt ist zudem, dass die Empfangsantennen 14a bzw. 16a um einen (relativ zum Erfassungsabstand) kleinen Abstand S (im dargestellten Ausführungsbeispiel ca. 2,5 cm) in der Aperturfläche beabstandet sind. Auch ist zur weiteren Aufbereitung und Auswertung dieser Hochfrequenzsignale bzw. deren demodulierter Zwischenfrequenzsignale Bezug genommen auf den Beschreibungsanhang, wobei dieser nachfolgend zusätzlich unter Bezug auf die Fig. 3 ergänzend erläutert wird.

Die Fig. 3 verdeutlicht die schematische Realisierung der Signalverarbeitungseinheit 18 gemäß Fig. 1, welcher die aus der Doppler-Hochfrequenzeinheit (gemäß Fig. 2) erzeugten Signale OUT A und OUT B anliegen.

Diese Zwischenfrequenzsignale werden zunächst in einer A/D-Wandlereinheit 44 digitalisiert und nachfolgend in einer Spektralanalyseeinheit 48 sowie einer (vorgeschalteten) Doppler-Demodulationseinheit 46 spektral analysiert bzw. geeignet demoduliert. Konkret werden im A/D-Wandler 44 die Analogsignale OUT A und OUT B mit der Tastzeit $T_s/2$ in der Mitte der Halbperiode des Signals TUN (Fig. 2) abgetastet. Im Demodulator 46 werden die jeweiligen Abschnitte von Signal OUT A und OUT B auf die Dopplersignale $U_{A1}$ und $U_{A2}$ bzw. $U_{B1}$ und $U_{B2}$ verteilt, wobei die (modulierten) Dopplersignale mit maximaler Amplitude definiert sind. Diese maximale Spektralkomponente wird durch die Spektralanalyseeinheit 48 etwa mit Hilfe des sogenannten Görtzel-Algorithmus (Formel 6.1 bis 6.3 im Beschreibungsanhang) gesucht, wobei jede Spektralkomponente durch ihre Frequenz, Amplitude und Phase bestimmt ist. Weil die modulierten Dopplersignale dieselbe Frequenz F haben müssen, wird diese Frequenz als Mittelwert der Frequenzen der maximalen Spektralkomponenten bestimmt. Zusätzlich ermittelt die statistische Auswerteeinheit 60 die Varianzen zwischen den anliegenden Signalen. Dabei ist wiederum zur ergänzenden Erläuterung auf den Beschreibungsanhang sowie auf die Fig. 4 zu verweisen, welche, die Ebene der Erfassung, also etwa die Erdoberfläche und Bewegungsebene beschreibend, die verschiedenen geometrischen Verhältnisse, Abhängigkeiten und für die im Beschreibungsanhang verwendeten Variablen erläutert. Dabei sind aus den Phasen nach den Formeln 3.5 bis 3.17 Radialgeschwindigkeit, Azimut (Winkel) und Abstand bestimmt.

In Fig. 3 schematisch gezeigten Kalman-Filtern 72 bzw. 74 werden der bestimmte Abstand und die Radialgeschwindigkeit bzw. der Azimutwinkel und die Winkelgeschwindigkeit mit Hilfe der Varianzdaten der Auswerteeinheit 60 gefiltert; prinzipiell wird die Winkelgeschwindigkeit als Unterschied der Azimutwinkel zwischen zwei Messungen betrachtet, wobei im praktischen Beispiel dies etwa mit einer Periode T = 128 ms erfolgt. Die Formeln 7.1 bis 7.15 im Beschreibungsanhang erläutern die Funktionsweise der Kalman-Filter, wobei für jeden Schritt ein gemessener Wert mit dem extrapolierten Wert aus einem vorhergehenden Schritt verglichen wird, hiervon dann wiederum der wahrscheinlichste Wert als Wert mit der größten Genauigkeit bestimmt wird.

Die sich als Ergebnis dieser Filterprozesse ergebenden Koordinaten des Erfassungsobjekts (Ziels) 20 werden einer Entscheidungseinheit 80 zur Aktivierung der Leuchteneinheit 10 übergeben, wobei wiederum geeignet an einer Parameter- bzw. Schwellwerteinheit 90 einstellbare Kriterien (etwa Dämmerungs- und/oder Umgebungshelligkeit-Schwellwerte, minimale Einschaltdauer oder ähnliches) geeignet vorwählbar sind. Auch lässt sich etwa durch geeignete Einstellung ein maximaler Abstand od. dgl. vorwählen.

In für die Praxis besonders bedeutsamer Weise ist die Fig. 1 realisiert als Sensor-Wandleuchte mit in das gemeinsame Gehäuse integrierter Leuchtenvorrichtung 10, wobei diese weiter bevorzugt zwei (ab- und aufwärts gerichtete) Lichtaustrittsflächen anbietet und im beschriebenen Ausführungsbeispiel die Aperturebene für den Erfassungsbereich zum Erzeugen eines horizontalen Erfassungsbereichs vertikal ausgebildet ist. Im praktischen Betrieb lässt sich so bei einer typischen Befestigungshöhe von ca. 2 m ein wirksamer Erfassungsbereich (Abstände $N_1$, $N_2$ von dem Gehäuse) von z.B. zwischen 1 m (als minimalem Abstand) und z.B. 6 m als maximalem Abstand einstellen. Da ein eindeutiger maximaler Abstand nach Formel 4.6 (Beschreibungsanhang) von dem Unterschied der Frequenzen $f_1$ und $f_2$ abhängt und diese Frequenzen im Bereich zwischen 5 MHz und 8 MHz eingestellt werden, lassen sich maximale Abstände zwischen ca. 10 m und 15 m erreichen.

Typischerweise sollte zum Auslösen der Bewegungserfassung die Radialgeschwindigkeit des Ziels (Erfassungsobjekt) im Bereich zwischen ca. 9,1 m/s und 1,2 m/s liegen.

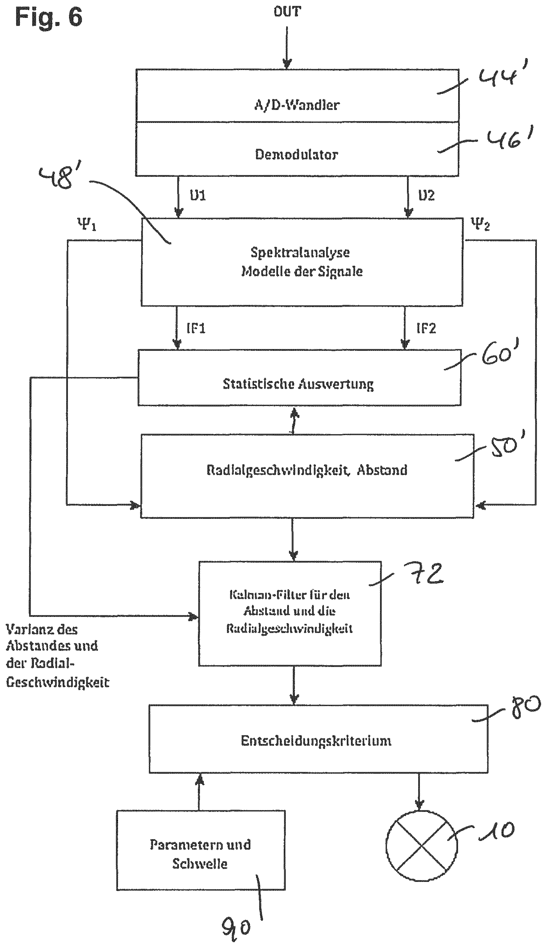

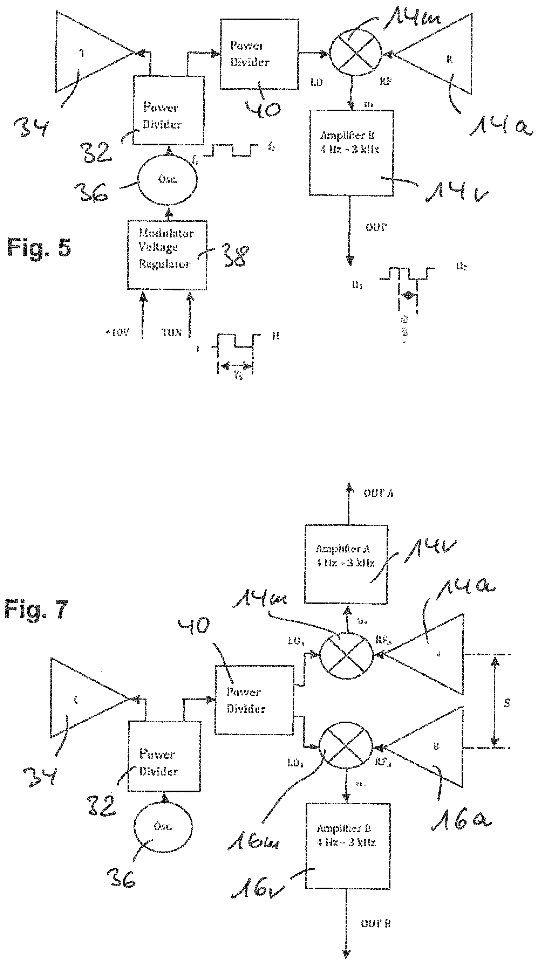

Die in der Fig. 5 (insoweit analog zur Fig. 2) gezeigte Variante der Erfindung sieht vor, dass nur das Abstands- und Abstandsänderungssignal erzeugt wird. Diese Variante bietet sich insbesondere für einen Einsatzkontext an, bei welchem diese Erfassungsgrößen für einen gewünschten Detektorzweck ausreichen. Vorteilhaft benötigt diese Variante der Erfindung, welche auf demselben konstruktiven und Signalauswertungsprinzip wie das Ausführungsbeispiel der Fig. 1 bis 4, basiert, lediglich einen Kanal, insoweit ist bei dieser Variante die Darstellung der Fig. 2 mit einem Paar von Antennen bzw. vorgeschalteten Mischern gezeigte Konfiguration auf jeweils eine Antenne samt Mischer reduziert, wobei gleichwohl diese Variante dann auch mit dem (rechteckförmig modulierten) gestuft variierten Lokaloszillatorsignal angesteuert bzw. gemischt wird. Entsprechend werden gemäß nachfolgender Erläuterung bzw. Darstellung in Abschnitt 8. unten auch lediglich die Zwischenfrequenzsignale OUT (Fig. 5) spektral analysiert und nachfolgend für die Bestimmung der jeweils gewünschten Größen ausgewertet; die Darstellung der Fig. 6 ist insoweit analog zur Fig. 3.

In der Annahme, dass etwa in der einkanaligen Variante (lediglich) für die Messung des Abstands bzw. Abstandsänderung das Zwischenfrequenzsignal OUT (Fig.5) erzeugt und verwendet werden würde, entstehen nach der Demodulation (Fig. 6, Einheit 46') und der Spektralanalyse (Einheit 48') Zwischenfrequenzsignale $IF_1$ und $IF_2$, weiter illustriert durch die Tabelle 3.1 in Abschnitt 8. Die Phase des Dopplersignals $IF_1$ ist abhängig vom Abstand R des Ziels von der (hier einzigen) Antenne 14 und der Frequenz $f_1$, während die Phase des Dopplersignals $IF_2$ abhängig von R und $f_2$ ist. Dieser Zusammenhang ermöglicht es (vgl. Formel 3.7 in Abschnitt 8), aus dem Phasenunterschied den Abstand R des Ziels zu bestimmen, wobei zur weiteren Erläuterung auf den Abschnitt "8. Isolierte Bestimmung von Abstand und Abstandsänderung" verwiesen wird und die weitergehenden Analysen zur Eindeutigkeit, Signalanalyse und Filterung analog der zweikanaligen Lösung gemäß Fig. 1 bis 4 gelten.

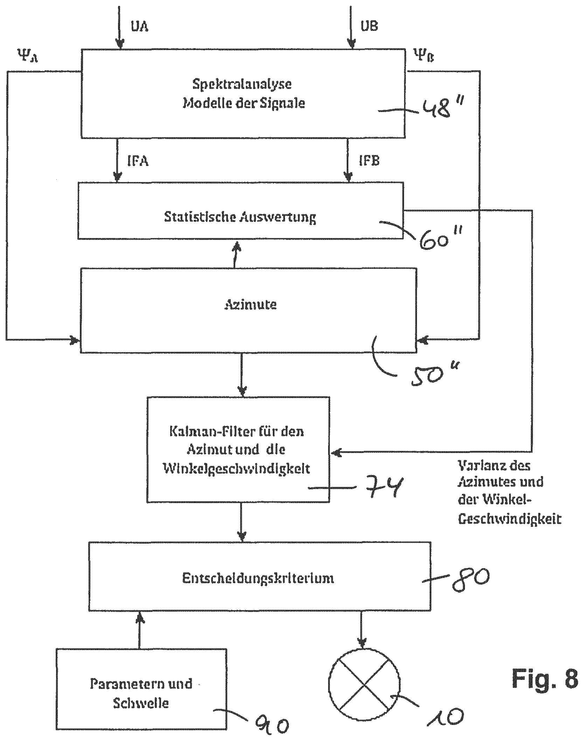

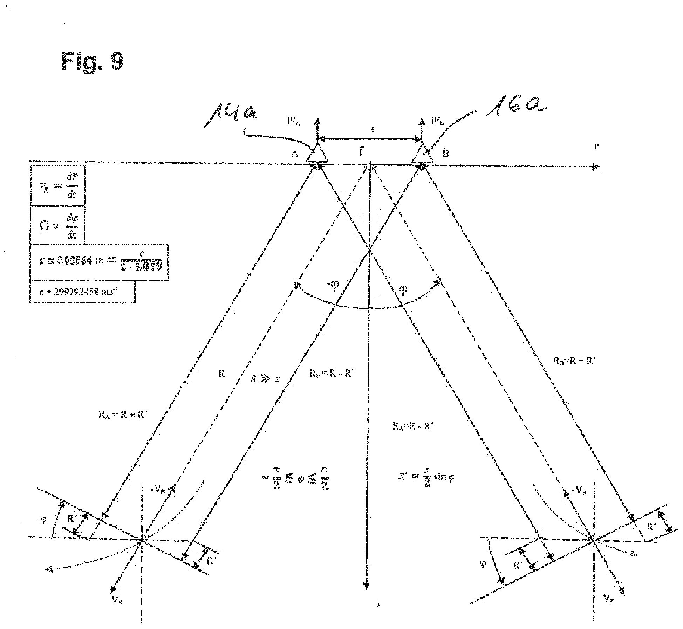

Dagegen setzt die (isolierte) Bestimmung von Azimutwinkel bzw. Winkeländerung die zweikanalige Realisierung gemäß Fig. 7, insoweit analog Fig. 2 voraus, wobei, in Abkehr von der Lösung gemäß erstem Ausführungsbeispiel, keine Variation der Frequenz des Lokaloszillators (miteinander benachbarten Frequenzen) notwendig ist, vielmehr erfolgt hier eine vereinfachte Realisierung der Hochfrequenz-Baugruppe, wie in Fig. 7 gezeigt, bei analog zur Fig. 2 bezeichneten Funktionskomponenten. Bei dieser Variante der Erfindung entstehen entsprechend Zwischenfrequenzsignale OUT A bzw. OUT B als empfangsseitige Mischerprodukte, welche in der anliegenden Weise gemäß Abschnitt "9. Isolierte Bestimmung von Azimutwinkel und Winkeländerung" behandelt werden, ergänzend ist auf die Messprinzipdarstellung von Fig. 8 und Fig. 9 für diese Variante zu verweisen, wobei wiederum die Signalanalyse und nachgeschaltete Filterung analog dem zuerst beschriebenen Ausführungsbeispiel der Fig. 1 bis 4 erfolgt.

Beschreibungsanhang

(gilt als Teil der Beschreibung und beschreibt die Erfindung)

**3. Modell der Signale**

$$IF_{A1}[t_i] = U_A cos\left[2\pi\frac{f_1}{c}(2V_R\ t_i + R_A)\right] \qquad = U_A cos[2\pi\ F_1 t_i + \Psi_{A1}]$$

$$IF_{A2}[t_i] = U_A cos\left[2\pi\frac{f_2}{c}\left(2V_R\left(t_i + \frac{T_S}{2}\right) + R_A\right)\right] \quad = U_A cos[2\pi\ F_2\ t_i + \Psi_{A2}]$$

$$IF_{B1}[t_i] = U_B cos\left[2\pi\frac{f_1}{c}(2V_R\ t_i + R_B) \pm \pi\right] \qquad = U_B cos[2\pi\ F_1\ t_i + \Psi_{B1}]$$

$$IF_{B2}[t_i] = U_B cos\left[2\pi\frac{f_2}{c}\left(2V_R\left(t_i + \frac{T_S}{2}\right) + R_B\right) \pm \pi\right] = U_B cos[2\pi\ F_2\ t_i + \Psi_{B2}]$$

Tabelle 3.1

$$\Psi_{A1} = 2\pi\ \frac{f_1}{c}\left(2R - \frac{s}{2}\sin\varphi\right)$$

(3.2)

(3.1) $\qquad \Psi_{A2} = 2\pi\ \frac{f_2}{c}\left(2R - \frac{s}{2}\sin\varphi\right) + 2\pi\ F\ \frac{T_S}{2}$

$$\Psi_{B1} = 2\pi\ \frac{f_1}{c}\left(2R + \frac{s}{2}\sin\varphi\right) \pm \pi$$

(3.4)

(3.3) $\qquad \Psi_{B2} = 2\pi\ \frac{f_2}{c}\left(2R + \frac{s}{2}\sin\varphi\right) + 2\pi\ F\ \frac{T_S}{2} \pm \pi$

**Radialgeschwindigkeitbestimmung:**

$$F_Q = \frac{2V_R\ f_Q}{c} \qquad\qquad Q = 1,2 \qquad\qquad 2\frac{f_1 - f_2}{f_1 + f_2} \le 0{,}0017 \Rightarrow F_1 \approx F_2 = F$$

$$V_R = \frac{F\ c}{f_1 + f_2}$$

(3.5)

**Azimutbestimmung:**

$$\Psi_{B1} - \Psi_{A1} = 2\pi\ s\ \frac{f_1}{c}\sin\varphi \pm \pi$$

(3.7)

(3.6) $\quad \Psi_{B2} - \Psi_{A2} = 2\pi\, s\, \dfrac{f_2}{c}\sin\varphi \pm \pi$

$$\varphi_1 = arsin\left[\frac{c}{2\pi s\, f_1}(\Psi_{B1} - \Psi_{A1} \pm \pi)\right]$$

(3.9)

(3.8) $\quad \varphi_2 = arsin\left[\dfrac{c}{2\pi s\, f_2}(\Psi_{B2} - \Psi_{A2} \pm \pi)\right]$

$$\varphi = \frac{\varphi_1 + \varphi_2}{2}$$

(3.10)

$$\Psi_{B1} - \Psi_{A1} + \Psi_{B2} - \Psi_{A2} = 2\pi s\,\sin\varphi\,\frac{f_1 + f_2}{c} \pm 2\pi$$

(3.11)

$$\varphi = arcsin\left[\frac{c}{2\pi\, s\,(f_1 + f_2)}(\Psi_{B1} + \Psi_{B2} - \Psi_{A1} - \Psi_{A2} \mp 2\pi)\right] ;\; \frac{c}{s\,(f_1 + f_2)} = 1$$

(3.12)

**Abstandbestimmung:**

$$\Psi_{A1} - \Psi_{A2} = 2\pi\,\left(2R - \frac{s}{2}\sin\varphi\right)\frac{f_1 - f_2}{c} - 2\pi\, F\,\frac{T_s}{2}$$

(3.13)

$$\Psi_{B1} - \Psi_{B2} = 2\pi\,\left(2R + \frac{s}{2}\sin\varphi\right)\frac{f_1 - f_2}{c} - 2\pi\, F\,\frac{T_s}{2}$$

(3.14)

$$2R - \frac{s}{2}\sin\varphi = \frac{c}{2\pi(f_1 - f_2)}\left[\Psi_{A1} - \Psi_{A2} + 2\pi\, F\,\frac{T_s}{2}\right]$$

(3.15)

$$2R + \frac{s}{2}\sin\varphi = \frac{c}{2\pi(f_1 - f_2)}\left[\Psi_{B1} - \Psi_{B2} + 2\pi\, F\,\frac{T_s}{2}\right]$$

(3.16)

$$R = \frac{c}{8\pi \, (f_1 - f_2)} \, (\Psi_{B1} - \Psi_{B2} + \Psi_{A1} - \Psi_{A2} + 2\pi \, F \, T_s)$$

(3.17)

4. Eindeutigkeit

$$F > 0$$

(4.1)

$$0 \leq \Psi_{PQ} < 2\pi \qquad\qquad P = A, B \qquad\qquad Q = 1, 2$$

(4.2)

$$-\pi \leq \Psi_{PQ} - \Psi_{RS} < \pi \qquad\qquad P, R = A, B \qquad\qquad Q, S = 1, 2$$

(4.3)

Azimut:

$$\varphi = \arcsin x \qquad -1 \leq x \leq 1 \qquad -\frac{\pi}{2} \leq \varphi \leq \frac{\pi}{2}$$

(4.5)

$$-1 \leq \frac{\Psi_{B1} - \Psi_{A1} \pm \pi}{\pi} \leq 1 \qquad\qquad -1 \leq \frac{\Psi_{B2} - \Psi_{A2} \pm \pi}{\pi} \leq 1$$

$$-2\pi \leq (\Psi_{B1} + \Psi_{B2} - \Psi_{A1} - \Psi_{A2} \mp 2\pi) \leq 2\pi$$

Abstand:

$$-\pi \leq \Psi_{A1} - \Psi_{A2} + 2\pi \, F \, \frac{T_s}{2} \leq \pi \qquad\qquad -\pi \leq \Psi_{B1} - \Psi_{B2} + 2\pi \, F \, \frac{T_s}{2} \leq \pi$$

$$-\frac{c}{4 \, (f_1 - f_2)} \leq R \leq \frac{c}{4 \, (f_1 - f_2)}$$

(4.6)

$$-2\pi \leq \Psi_{B1} - \Psi_{B2} + \Psi_{A1} - \Psi_{A2} + 2\pi \, F_2 \, T_s \leq 2\pi$$

$$R > 0 \quad \textit{Ziel geht vom Sensor}$$
$$R < 0 \quad \textit{Ziel geht zum Sensor}$$
$$f_1 - f_2 = 10\,MHz \quad \rightarrow \quad |R| \leq 7{,}495\,m$$

### 5. Signalanalyse

Gemessene Signale werden auf OUT A wie $u_A$ und auf OUT B wie $u_B$ bezeichnet.

Beide Signale werden im Zeitfenster *T=128 ms* mit Tastzeit $T_S/2 = 0{,}5\,ms$ abgetastet.

Aus jedem Signal werden so 256 Abtastwerte bekommen.

*N=128* Unpaarigkeitsabtastwerte mit Tastzeit $T_S = 1$ ms bilden Signal $u_{P1}$, *P = A, B* und

*N=128* Paarigkeitsabtastwerte Signal $up_2$.

Bei einem Ziel werden die Signale $u_{PQ}$ durch Modells $IF_{PQ}$ und Rauschen *w* ersetzt.

$$u_{PQ}[i] = IF_{PQ}[i] + w[i]$$
$$(5.1)$$

Die Varianz

$$D_{PQ}[w] = \frac{1}{N}\sum_{i=0}^{N-1}\left[u_{PQ}[i] - IF_{PQ}[i]\right]^2$$
$$(5.2)$$

stellt die Leistung des Rauschen vor und der quadratische Mittewert

$$P_{PQ}[IF] = \frac{1}{N}\sum_{i=0}^{N-1}\left[IF_{PQ}[i]\right]^2$$
$$(5.3)$$

die Leistung der Signale. Verhältnis

$$SN_{PQ} = \frac{P[IF]}{D[w]}$$
$$(5.4)$$

stellt den Abstand des Signals zum Rauschen vor.

Zeit $t0_{PQ}$ wird gefunden, wann $IF_{PQ}(t0_{PQ})=0$.

$$t0_{PQ} = \frac{\frac{\pi}{2} - \Psi_{PQ}}{2\pi\,F}$$
$$(5.5)$$

In diesem Zeit gelt

$$U_{PQ}\cos\left(2\pi\,F\,t0_{PQ} + \Psi_{PQ} \pm \sigma_{PQ}[w_\Psi]\right) = \sigma_{PQ}[w],$$
$$(5.6)$$

$$wo\ \sigma = \left|\sqrt{D}\right|\ \textit{ist Standartabweichung}.$$

Davon

Davon

$$\sigma_{PQ}[\Psi] = \left| arccos\left(\sqrt{\frac{1}{SN_{PQ}}}\right) - \frac{\pi}{2}\right|, \ SN_{PQ} \geq 1 \implies 0 \leq \sigma[w_\Psi] \leq \frac{\pi}{2}$$

(5.7)

Aus der Standartabweichung der Phase werden die Varianz des Azimutes,

$$D[w_\varphi] = arcsin^2\left[\frac{1}{4\pi^2}\sum_{P=A}^{B}\sum_{Q=1}^{2}\sigma_{PQ}^2[w_\Psi]\right], \ 0 \leq \sigma[w_\varphi] \leq \frac{\pi}{2}$$

(5.8)

die Varianz der Winkelgeschwindigkeit,

$$D[w_\Omega[n]] = \frac{D[w_\varphi[n]]+D[w_\varphi[n-1]]}{T^2}, \ 0 \leq \sigma[w_\Omega[n]] \leq \frac{\pi}{T\sqrt{2}}$$

(5.9)

die Varianz des Abstandes

$$D[w_R] = \left(\frac{c}{8\pi(f_1-f_2)}\right)^2\sum_{P=A}^{B}\sum_{Q=1}^{2}\sigma_{PQ}^2[w_\Psi],$$

(5.10)

$$0 \leq \sigma[w_R] \leq \frac{c}{8(f_1-f_2)} = 3{,}75 \ m \ f\ddot{u}r \ |f_1-f_2| = 10 \ MHz$$

bestimmt.

Signal

$$x_{PQ}[i] = U_{PQ} \ cos\left(2\pi \ F_{PQ}T_S \ i + \Psi_{PQ}\right), \ i = 0, \ldots, 127$$

(5.11)

wird so gesucht, dass quadratischer Mittewert

$$D_{PQ} = \frac{1}{N}\sum_{i=0}^{N-1}\left[u_{PQ}[i] - x_{PQ}[i]\right]^2$$

(5.12)

ist der kleinste.

Mit der größten Wahrscheinlichkeit $x_{PQ}$ entspricht dem größten Signal aus der Fourierreihe des diskreten Signals $u_{PQ}$. Dann

$$F_{PQ} = \frac{K_{PQ}}{N\,T_S} = \frac{K_{PQ}}{T}, \ K_{PQ} = Nummer \ der \ Spektrallinien \ mit \ der \ größten \ Amplitude$$

Für die größere Genauigkeit werden $N$ Abtastwerte des Signales $u_{PQ}$ mit Nullabtastwerten auf $M = 4096$ Abtastwerte ergänzt.

$$F_{PQ} = \frac{k_{PQ}}{32\,T}$$
(5.13)

Der Mittewert *F* der Dopplerfrequenz wird gerechnet.

$$F = \frac{1}{4}[F_{A1} + F_{A2} + F_{B1} + F_{B2}]$$
(5.14)

Weil die Messungen der Dopplerfrequenzen unabhängig sind, die Varianz *D[w_V]* der Radialgeschwindigkeit gerechnet wird.

$$D[w_V] = \sum_{P=A}^{B} \sum_{Q=1}^{2} \left[\frac{c}{f_1 + f_2}[F_{PQ} - F]\right]^2$$
(5.15)

Das Ziel wird festgestellt, wenn |F - F_{PQ}| ≤ 3 *Hz* für alle P, Q. Das bedeutet, die maximale Varianz der Radialgeschwindigkeit ist 0,024 m$^2$ s$^{-2}$. Die maximale Standartabweichung ist dann

$$\sigma_{max}[v_R] = \sqrt{D_{max}} = 0.155\ ms^{-1}$$
(5.16)

Die Spektralkomponenten werden durch den Görtzel-Algorithmus gerechnet.

**Suchen der maximalen Spektrallinie:**

Frequenzbereich von 1 bis 45 Hz wird jede achte Spektrallinie aus der 4096 punktförmigen FFT berechnet. In der Mitte zwischen zwei maximalen Linien wird die neue Linie gerechnet. Das wird so lange wiederholtet, bis die Genauigkeit wie bei FFT der Länge 4096 Abtastwerte bekommen wird.

**6. Görtzel - Algorithmus**

Görtzel - Algorithmus realisiert die Rechnung einer Komponente DTFT aus der Reihe der Abtastwerte *x[n], n = 0, ..., N-1* mit der beliebigen Genauigkeit. Die Komponente wird wie den Ausgangsabtastwert IIR (Infiniti Impuls Response) des linearen Systems im Zeit *N*. Die gesuchte Spektrallinie *X[k]* ist der Nte Abtastwert der Reihe *y_k[N]* für beliebige reale *k*. Die Differenzgleichung des IIR Systems ist

$$y_k[n] = x[n] - x[n-1]e^{-j\frac{2\pi k}{N}} + 2\cos\left(\frac{2\pi k}{N}\right) y_k[n-1] - y_k[n-2]$$
(6.1)
$$bei\ x[-1] = y[-1] = y[-2] = 0$$

Die Struktur wird durch der inneren Zustandsvariablen geschrieben.

$$s[n] = x[n] + 2\cos\left(\frac{2\pi k}{N}\right) s[n-1] - s[n-2]$$
(6.3)

Der Ausgang wird mit der Gleichung

$$y_k[n] = \left( s[n] - s[n-1]e^{-j\frac{2\pi k}{N}} \right) e^{-j2\pi k}, bei\ s[-1] = s[-2] = 0$$
(6.4)

beschrieben.

Die Zustandsbeschreibung ist besser, weil uns nur der Ausgang $y_k[N]$ interessiert. System $s[N]$, das nur mit den realen Zahlen arbeitet, wird $N+1$ mal iteriert und nur in dem letzten Schritt wird $y_k[N]$ gerechnet.

## 7. Kalman - Filter

**Filtration des radialen Abstandes und radialen Geschwindigkeit:**

$R[n]$     wirklicher radialer Abstand im Schritt $n$

$V[n]$     wirkliche radiale Geschwindigkeit im Schritt $n$

$R_u[n]$     gemessener radialer Abstand im Schritt $n$

$V_u[n]$     gemessene radiale Geschwindigkeit im Schritt $n$

$\hat{R}_e[n]$     extrapolierter radialer Abstand im Schritt $n$

$\hat{V}_e[n]$     extrapolierte radiale Geschwindigkeit im Schritt $n$

$\hat{R}[n]$     Abschätzung des radialen Abstandes im Schritt $n$

$\hat{V}[n]$     Abschätzung der radialen Geschwindigkeit im Schritt $n$

$$\|P[n]\| = \left\|\begin{matrix} R[n] \\ V[n] \end{matrix}\right\| \quad \|P_u[n]\| = \left\|\begin{matrix} R_u[n] \\ V_u[n] \end{matrix}\right\| \quad \|\hat{P}_e[n]\| = \left\|\begin{matrix} \hat{R}_e[n] \\ \hat{V}_e[n] \end{matrix}\right\| \quad \|\hat{P}[n]\| = \left\|\begin{matrix} \hat{R}[n] \\ \hat{V}[n] \end{matrix}\right\|$$
(7.1)

**Modell der Messungen:**

$$\|P_u[n]\| = \|D\|\,\|P[n]\| + \|r[n]\| + \|w[n]\|$$
(7.2)

$\|D\|$     Transfermatrix, bei uns $\|D\| = \left\|\begin{matrix} 1 & 0 \\ 0 & 1 \end{matrix}\right\|$

$\|r[n]\|$     Bekannter Vektor, bei uns $\|r[n]\| = \left\|\begin{matrix} 0 \\ 0 \end{matrix}\right\|$

$\|w[n]\|$     weißes Rauschen, bei uns $\|w[n]\| = \left\|\begin{matrix} w_R[n] \\ w_V[n] \end{matrix}\right\|$

Mittelwert

$$E\big[\|w[n]\|\big] = \left\|\begin{matrix} E\big[w_R[n]\big] \\ E\big[w_V[n]\big] \end{matrix}\right\| = \left\|\begin{matrix} 0 \\ 0 \end{matrix}\right\|,$$

Varianzmatrix

$$\|W[n]\| = \left\|\begin{matrix} D\big[w_R[n]\big] & 0 \\ 0 & D\big[w_V[n]\big] \end{matrix}\right\|$$

$\|w[n]\|$ *und* $\|P[n]\|$ sind unkorreliert $E[\|w[n]\|^T \|P[n]\|] = 0$

Autokovarriante Funktion der radialen Geschwindigkeit

$$K_V(\tau) = E\big[\big(V_u(t) - V\big)\big(V_u(t+\tau) - V(\tau)\big)\big] = D\big[w_V\big]\, e^{-\alpha|\tau|} \quad \alpha > 0$$

**Modell der Parameter:**

$$\|P[n]\| = \|A\|\,\|P[n-1]\| + \|b[n]\| + \|q[n]\|$$
$$(7.3)$$

$\|A\|$ Übergangsmatrix,

$$\|A\| = \left\|\begin{matrix} 1 & \frac{1-e^{-\alpha T}}{\alpha} \\ 0 & e^{-\alpha T} \end{matrix}\right\| \quad \alpha > 0 \quad T = 0.128\, s$$

$\|b[n]\|$ Bekannter Vektor, bei uns $\quad \|b[n]\| = \left\|\begin{matrix} 0 \\ 0 \end{matrix}\right\|$

$\|q[n]\|$ weißer Zufallsprozess, bei uns $\quad \|q[n]\| = \left\|\begin{matrix} q_R[n] \\ q_V[n] \end{matrix}\right\|$

Mittelwert $E[\|q[n]\|] = 0$
Varianzmatrix

$$\|Q[n]\| = \left\|\begin{matrix} Q_{RR}[n] & Q_{RV}[n] \\ Q_{VR}[n] & Q_{VV}[n] \end{matrix}\right\|$$

$$Q_{RR}[n] = \frac{D[w_V[n]]}{\alpha^2}\,(2\alpha T - 3 + 4e^{-\alpha T} - e^{-2\alpha T})$$

$$Q_{RV}[n] = Q_{VR}[n] = \frac{D[w_V[n]]}{\alpha}\,(1 - e^{-\alpha T})$$

$$Q_{VV}[n] = D\big[w_V[n]\big]\,(1 - e^{-2\alpha T})$$

$\|w[n]\|$ *und* $\|q[n]\|$ sind unkorreliert

**Abschätzungen der extrapolierten Parameter:**

Abschätzungen der Parameter im Schritt *n* auf Grund der Messungen im Schritt *n-1* (keine Messung im Schritt *n*).

$$\left\|\hat{P}_e[n]\right\| = \|A\| \left\|\hat{P}[n-1]\right\| + \|b[n]\| \Rightarrow \hat{R}_e[n] = \hat{R}[n-1] + \frac{1-e^{-\alpha T}}{\alpha} \hat{V}[n-1]$$

(7.4)

$$\hat{V}_e[n] = e^{-\alpha T} \hat{V}[n-1]$$

**Genauigkeit der extrapolierten Abschätzungen:**

Die Genauigkeit ist durch Kovariantmatrix des Fehlers der extrapolierten Abschätzung für die Zeit *T* von der letzten Messung.

$$\|S_e[n]\| = \|A\| \|S[n-1]\| \|A\|^T + \|Q[n]\|$$

(7.5)

$$S_{eRR}[n] = S_{RR}[n-1] + 2 S_{RV}[n-1] A_{12} + S_{VV}[n-1] A_{12}^2 + Q_{RR}[n]$$

$$S_{eRV}[n] = S_{eVR}[n] = S_{RV}[n-1] A_{22} + S_{VV}[n-1] A_{12} A_{22} + Q_{RV}[n]$$

$$S_{eVV}[n] = S_{VV}[n-1] A_{22}^2 + Q_{VV}[n]$$

**Verstärkungsmatrix:**

$$\|H[n]\| = \|S_e[n]\| \|D[n]\|^T \left(\|D[n]\| \|S_e[n]\| \|D[n]\|^T + \|W[n]\|\right)^{-1}$$

(7.6)

$$H_{RR}[n] = \frac{S_{eRR}[n] \left(S_{eVV}[n] + D[w_V[n]]\right) - S_{eRV}^2[n]}{\left(S_{eRR}[n] + D[w_R[n]]\right) \left(S_{eVV}[n] + D[w_V[n]]\right) - S_{eRV}^2[n]}$$

$$H_{RV}[n] = \frac{S_{eRV}[n] \left(S_{eRR}[n] + D[w_R[n]]\right) - S_{eRV}[n] S_{eRR}[n]}{\left(S_{eRR}[n] + D[w_R[n]]\right) \left(S_{eVV}[n] + D[w_V[n]]\right) - S_{eRV}^2[n]}$$

$$H_{VR}[n] = \frac{S_{eRV}[n] \left(S_{eVV}[n] + D[w_V[n]]\right) - S_{eRV}[n] S_{eVV}[n]}{\left(S_{eRR}[n] + D[w_R[n]]\right) \left(S_{eVV}[n] + D[w_V[n]]\right) - S_{eRV}^2[n]}$$

$$H_{VV}[n] = \frac{S_{eVV}[n] \left(S_{eRR}[n] + D[w_R[n]]\right) - S_{eRV}^2[n]}{\left(S_{eRR}[n] + D[w_R[n]]\right) \left(S_{eVV}[n] + D[w_V[n]]\right) - S_{eRV}^2[n]}$$

Grenzwerte:

$$\|W\| = 0 \implies \|H\| = \begin{Vmatrix} 1 & 0 \\ 0 & 1 \end{Vmatrix} \quad \textit{genaue Messung}$$

$$\|W\| = \infty \implies \|H\| = \begin{Vmatrix} 0 & 0 \\ 0 & 0 \end{Vmatrix} \quad \textit{falsche Messung}$$

**Genauigkeit der Parameterabschätzungen:**

Den Fehler der gefilterten Abschätzungen beschreibt Kovariantmatrix.

$$\|S[n]\| = \|S_e[n]\| - \|H[n]\| \, \|D[n]\| \, \|S_e[n]\|$$
$$(7.7)$$

$$S_{RR}[n] = S_{eRR}[n] \, (1 - H_{RR}[n]) - S_{eRV}[n] \, H_{RV}[n]$$

$$S_{RV}[n] = S_{eRV}[n] \, (1 - H_{RR}[n]) - S_{eVV}[n] \, H_{RV}[n]$$

$$S_{VR}[n] = S_{eRV}[n] \, (1 - H_{VV}[n]) - S_{eRR}[n] \, H_{VR}[n]$$

$$S_{VV}[n] = S_{eVV}[n] \, (1 - H_{VV}[n]) - S_{eRV}[n] \, H_{VR}[n]$$

Bei der falschen Messung: $\|S\| = \|S_e\|$

**Parameterabschätzungen - gefilterte Parameter:**

$$\|\hat{P}[n]\| = \|\hat{P}_e[n]\| + \|H[n]\| \, (\|P_u[n]\| - \|r[n]\| - \|D[n]\| \, \|\hat{P}_e[n]\|)$$
$$(7.8)$$

$$\hat{R}[n] = \hat{R}_e[n] + H_{RR}[n] \, (R_u[n] - \hat{R}_e[n]) + H_{RV}[n] \, (V_u[n] - \hat{V}_e[n])$$

$$\hat{V}[n] = \hat{V}_e[n] + H_{VR}[n] \, (R_u[n] - \hat{R}_e[n]) + H_{VV}[n] \, (V_u[n] - \hat{V}_e[n])$$

Bei der genauen Messung: $\|\hat{P}[n]\| = \|P_u[n]\|$
Bei der falschen Messung: $\|\hat{P}[n]\| = \|\hat{P}_e[n]\|$

**Startpunkt:**

Aus den fünf nacheinander gehenden Messungen werden drei geltende Werte bekommen. Aus den Werten wird ein Mittelwert gemacht, der wie Schritt 1 bezeichnet wird.

$$R_u[1], V_u[1], D[w_R[1]], D[w_V[1]]$$
$$(7.9)$$

$$\hat{R}[1] = R_u[1], \hat{V}[1] = V_u[1], \|S[1]\| = \|W[1]\|$$

$$R_u[2], V_u[2], D\big[w_R[2]\big], D\big[w_V[2]\big]$$
$$(7.10)$$
$$\big\|\hat{P}_e[2]\big\|, \|Q[2]\|, \|S_e[2]\|, \|H[2]\|, \big\|\hat{P}[2]\big\|, \|S[2]\|$$

**Filtration des Azimuts und der Winkelgeschwindigkeit:**

Das Verfahren ist gleich, nur die Eingangsdaten bilden das Azimut $\varphi$ und die Winkelgeschwindigkeit $\Omega$.

$$\|P[n]\| = \left\|\begin{matrix}\varphi[n]\\\Omega[n]\end{matrix}\right\| \quad \|P_u[n]\| = \left\|\begin{matrix}\varphi_u[n]\\\Omega_u[n]\end{matrix}\right\| \quad \big\|\hat{P}_e[n]\big\| = \left\|\begin{matrix}\hat{\varphi}_e[n]\\\hat{\Omega}_e[n]\end{matrix}\right\| \quad \big\|\hat{P}[n]\big\| = \left\|\begin{matrix}\hat{\varphi}[n]\\\hat{\Omega}[n]\end{matrix}\right\|$$
$$(7.11)$$

**Startpunkt:**

$$\varphi_u[1], D\big[w_\varphi[1]\big], D\big[w_\Omega[1]\big] = \frac{2D\big[w_\varphi[1]\big]}{T^2}$$
$$(7.12)$$

$$\hat{\varphi}[1] = \varphi_u[1], \ \hat{\Omega}[1] = 0, \|S[1]\| = \|W[1]\|$$

$$\Omega_u[n] = \frac{\varphi_u[n] - \varphi_u[n-1]}{T}$$
$$(7.13)$$

$$\varphi_u[2], \Omega_u[2], D\big[w_\varphi[2]\big], D\big[w_\Omega[2]\big]$$
$$\big\|\hat{P}_e[2]\big\|, \|Q[2]\|, \|S_e[2]\|, \|H[2]\|, \big\|\hat{P}[2]\big\|, \|S[2]\|$$

**Extrapolation der Parameter**

Wenn die gemessenen Daten schon geendet haben, Kalman - Filtration noch drei Schritte generiert.

$$\|P_u[n]\|, \|W[n]\|$$
$$(7.14)$$
$$\big\|\hat{P}_e[n]\big\|, \|Q[n]\|, \|S_e[n]\|, \|H[n]\|, \big\|\hat{P}[n]\big\|, \|S[n]\|$$

$$\|P_u[n+1]\| = 0, \|W[n+1]\| = \|W_{max}\|$$
$$(7.15)$$
$$\big\|\hat{P}_e[n+1]\big\|, \|Q[n+1]\|, \|S_e[n+1]\|, \|H[n+1]\| = 0, \big\|\hat{P}[n+1]\big\| = \big\|\hat{P}_e[n+1]\big\|,$$
$$\|S[n+1]\| = \|S_e[n+1]\|$$

**8. Isolierte Bestimmung von Abstand und Abstandsänderung**

$$IF_1[t_i] = U_{A1} \cos\left[2\pi \frac{f_1}{c}(2V_R\, t_i + 2R)\right] \qquad = \quad U_{A1}\cos[2\pi\, F_1 t_i + \Psi_1]$$

$$IF_2[t_i] = U_{A2} \cos\left[2\pi \frac{f_2}{c}\left(2V_R\left(t_i + \frac{T_S}{2}\right) + 2R\right)\right] \quad = \quad U_{A2}\cos[2\pi\, F_2\, t_i + \Psi_2]$$

Tabelle 3.1

$$\Psi_1 = 2\pi \frac{f_1}{c}\, 2R + \Psi_A \qquad\qquad (3.1)$$

$$\Psi_2 = 2\pi \frac{f_2}{c}\, 2R + 2\pi\, F\, \frac{T_S}{2} + \Psi_A \qquad\qquad (3.2)$$

**Radialgeschwindigkeitbestimmung :**

$$F_Q = \frac{2V_R\, f_Q}{c} \qquad Q = 1,2 \qquad 2\frac{f_1 - f_2}{f_1 + f_2} \le 0{,}0017 \Rightarrow F_1 \approx F_2 = F$$

$$V_R = \frac{F\, c}{f_1 + f_2} \qquad f_1 > f_2$$
$$(3.5)$$

Aus dem realen Signal wird nur $|F|$ bestimmt.

Wenn $F > 0$ , dann $\quad arg(IF) = 2\pi|F|t + \Psi$ .
(3.6)
Wenn $F < 0$ , dann $\quad -arg(IF) = 2\pi|F|t - \Psi$ .

**Abstandbestimmung:**

$$\Psi_1 - \Psi_2 = 4\pi\, R\, \frac{f_1 - f_2}{c} - 2\pi\, F\, \frac{T_s}{2}$$
$$(3.7)$$

Wenn $\psi_1 - \psi_2 < 0$,

dann $R = -\dfrac{c}{4\pi(f_1 - f_2)}\left[\Psi_1 - \Psi_2 + 2\pi\, F\, \frac{T_s}{2}\right]$ und $V_R < 0$ ;

wenn $\psi_1 - \psi_2 > 0$,

dann $R = \dfrac{c}{4\pi(f_1 - f_2)}\left[\Psi_1 - \Psi_2 + 2\pi F \dfrac{T_s}{2}\right]$ und $V_R > 0$ ;

**9. Isolierte Bestimmung von Azimutwinkel und Winkeländerung**

$$IF_A[t_i] = U_A cos\left[2\pi \frac{f}{c}(2V_R \, t_i + R + R_A)\right] \qquad = \quad U_{A1}cos[2\pi \, F t_i + \Psi_A]$$

$$IF_B[t_i] = U_B cos\left[2\pi \frac{f_1}{c}(2V_R \, t_i + R + R_B) + \pi\right] \qquad = \quad U_{B1}cos[2\pi \, F_1 \, t_i + \Psi_B]$$

Tabelle 3.1

$$\Psi_{A1} = 2\pi \frac{f_1}{c}\left(2R - \frac{s}{2}\sin\varphi\right) + \Psi_A \qquad\qquad (3.1)$$

$$\Psi_{B1} = 2\pi \frac{f_1}{c}\left(2R + \frac{s}{2}\sin\varphi\right) + \pi + \Psi_B \qquad\qquad (3.2)$$

**Radialgeschwindigkeitbestimmung**:

$$F = \frac{2V_R f}{c}$$

$$V_R = \frac{F\,c}{2f} \qquad\qquad (3.3)$$

Aus dem realen Signal wird nur $|F|$ bestimmt.

Wenn $F > 0$ , dann $\quad arg(IF) = 2\pi|F|t + \Psi$ . (3.4)

Wenn $F < 0$ , dann $\quad -arg(IF) = 2\pi|F|t - \Psi$ .

**Azimutbestimmung:**

$$\Psi_B - \Psi_A = 2\pi \, s \frac{f}{c}\sin\varphi + \pi + \Psi_B - \Psi_A \qquad\qquad (3.5)$$

Wenn $\Psi_B - \Psi_A < 0 \; und \; V_R > 0$ , $\qquad\qquad (3.6)$

$$\varphi = arsin\left[\frac{c}{2\pi s\,f}(+(\Psi_B - \Psi_A) + \pi)\right]$$

dann ; wenn $\psi_B - \psi_A < 0$ *und* $V_R < 0$,

$$\varphi = arsin\left[\frac{c}{2\pi s\,f}(-(\Psi_B - \Psi_A) - \pi)\right]$$

dann ; wenn $\psi_B - \psi_A > 0$ *und* $V_R < 0$,

$$\varphi = arsin\left[\frac{c}{2\pi s}(-(\Psi_B - \Psi_A) + \pi)\right]$$

dann ; wenn $\psi_B - \psi_A > 0$ *und* $V_R > 0$,

$$\varphi = arsin\left[\frac{c}{2\pi s\,f}(+(\Psi_B - \Psi_A) - \pi)\right]$$

dann ;

$$\frac{c}{2sf} = 1 \tag{3.7}$$

## Patentansprüche

1. Außensensorvorrichtung zur bewegungsgesteuerten Aktivierung einer elektrischen Vorrichtung, insbesondere einer Leuchtenvorrichtung (10), mit

   zur Bewegungserfassung ausgebildeten Doppler-Hochfrequenzdetektormitteln und diesen nachgeschalteten, die Aktivierung in Form einer Betriebsmodusänderung der nachzuschaltenden Vorrichtung steuernden Steuereinheit (24),

   wobei die Doppler-Hochfrequenzdetektormittel (12) ein auf einen gemeinsamen Erfassungsbereich (22) gerichtetes und voneinander um einen vorbestimmten Abstand (S) in einem gemeinsamen Gehäuse beabstandetes Paar von HF-Empfangsantennen (14a, 16a) mit jeweils zugeordneten Mischermitteln (14m, 16m) zum Erzeugen eines ersten und eines zweiten Zwischenfrequenzsignals (OUT A, OUT B) aufweisen, **dadurch gekennzeichnet, dass** den Mischermitteln eine Signalverarbeitungseinheit (18) nachgeschaltet ist, die zum Erzeugen eines einem Erfassungsobjekt (20) im Erfassungsbereich entsprechenden Winkel- sowie Winkeländerungssignal aus dem ersten und dem zweiten Zwischenfrequenzsignal durch digitale Signalverarbeitung ausgebildet ist, wobei

   das Winkelsignal einem Positionswinkel des Erfassungsobjekts in einer Bewegungsebene des Erfassungsobjekts, insbesondere der Bodenoberfläche in einem montierten Zustand der Außensensorvorrichtung, entspricht

   und das Winkeländerungssignal einer Winkelgeschwindigkeit des Erfassungsobjekts in der Bewegungsebene entspricht,

   und die Steuereinheit so ausgebildet ist, dass als Reaktion auf die Signale der Signalverarbeitungseinheit die Betriebsmodusänderung der nachzuschaltenden Vorrichtung dann erfolgt, wenn

   das Winkeländerungssignal zwischen einer vorbestimmten oder einstellbaren minimalen sowie maximalen Winkelgeschwindigkeit liegt.

2. Außensensorvorrichtung nach Anspruch 1, wobei,

   in die Mischermittel ein durch eine vorgeschaltete Modulatoreinheit mit einer Periode $T_s$ rechteckmoduliertes Oszillatorsignal eines Lokaloszillators eingekoppelt ist, das zwischen einer ersten ($f_1$) und einer zweiten ($f_2$) Frequenz umgeschaltet wird,

   die Signalverarbeitungseinheit (18) zusätzlich zum Erzeugen eines einem Erfassungsobjekt (20) im Erfassungsbereich entsprechenden Abstands- und Abstandsänderungssignal aus dem ersten und dem zweiten Zwischenfrequenzsignal durch digitale Signalverarbeitung ausgebildet ist, wobei

   das Abstandssignal einem Abstand des Erfassungsobjekts zum Gehäuse entspricht,

   das Abstandsänderungssignal einer Bewegungsgeschwindigkeit des Erfassungsobjekts in einer Richtung des Abstands entspricht,

   und die Steuereinheit so ausgebildet ist, dass als Reaktion auf die Signale der Signalverarbeitungseinheit die Betriebsmodusänderung der nachzuschaltenden Vorrichtung auch dann erfolgen kann, wenn

   das Abstandssignal zwischen einem vorbestimmten oder einstellbaren minimalen sowie maximalen Abstandswert liegt und/oder

   das Abstandsänderungssignal zwischen einem vorbestimmten oder einstellbaren minimalen sowie maximalen Abstandsänderungswert liegt.

3.  Vorrichtung nach einem der Ansprüche 1 oder 2, **dadurch gekennzeichnet. dass** das Gehäuse zur Decken- und/oder Wandmontage in einem Außenbereich, insbesondere einem Außenbereich eines Gebäudes, ausgebildet ist.

4.  Vorrichtung nach einem der Ansprüche 1 bis 3, **dadurch gekennzeichnet, dass** die elektrische Vorrichtung, insbesondere Leuchtenvorrichtung, in das Gehäuse integriert oder an das Gehäuse, bevorzugt lösbar, angesetzt ist.

5.  Vorrichtung nach einem der Ansprüche 1 bis 4, **dadurch gekennzeichnet, dass** die elektrische Vorrichtung eine Leuchtenvorrichtung ist und eine Mehrzahl von Lichtaustrittsflächen, bevorzugt durch einander gegenüberliegende Gehäusewände und/oder Gehäuseflachseiten realisiert, aufweist.

6.  Vorrichtung nach einem der Ansprüche 2 bis 5, **gekennzeichnet durch** Einrichte- und/oder Konfigurationsmittel (26), die zum Einstellen und/oder Verändern des minimalen und/oder maximalen Abstandswerts, des minimalen und/oder maximalen Abstandsänderungswerts und/oder der minimalen und/oder maximalen Winkeländerungsgeschwindigkeit, weiter bevorzugt drahtlos und/oder vorgesehen zum Betrieb in einem Montagezustand der Außensensorvorrichtung, ausgebildet sind.

7.  Vorrichtung nach einem der Ansprüche 1 bis 6, **dadurch gekennzeichnet, dass** die Steuereinheit zum Aktivieren einer Mehrzahl von räumlich voneinander beabstandet vorsehbaren und/oder drahtlos miteinander verbundenen Leuchtenvorrichtung ausgebildet ist.

8.  Bewegungssensor-gesteuerte Außenleuchte, aufweisend die Außensensorvorrichtung nach einem der Ansprüche 1 bis 7.

## Claims

1.  An external sensor device for movement-controlled activation of an electric device, in particular of a lighting device (10), with
    Doppler high frequency detecting means designed for motion detection, and a control unit (24) connected downstream thereof, controlling activation in the form of a change in operating mode of the device being connected downstream, wherein
    the Doppler high frequency detecting means (12) have a pair of HF receiving antennae (14a, 16a) directed towards a common detection region (22) and separated from one another by a predetermined distance (S) in a common housing, with respectively associated mixing means (14m, 16m) to produce a first and a second intermediate frequency signal (OUT A, OUT B), **characterised in that**
    a signal processing unit (18) is connected downstream of the mixing means, which unit is designed to produce, by digital signal processing, an angle corresponding to a detection object (20) in the detection region as well as an angle change signal from the first and the second intermediate frequency signal, wherein
    the angle signal corresponds to a position angle of the detection object in a movement plane of the detection object, in particular the base surface in an assembled state of the external sensor device,
    and the angle change signal corresponds to an angle speed of the detection object in the movement plane,
    and the control unit is designed such that the change in operating mode of the device to be connected downstream then takes place as reaction to the signals of the signal processing unit, if
    the angle change signal lies between a predetermined or adjustable minimum and maximum angle speed.

2.  The external sensor device according to claim 1, wherein,
    in the mixing means, a square wave-modulated oscillator signal of a local oscillator is coupled in by a modulator unit, connected upstream, with a period $T_s$, which signal is toggled between a first ($f_1$) and a second ($f_2$) frequency,
    the signal processing unit (18) is additionally designed to produce, by digital signal processing, a distance signal and distance change signal from the first and the second intermediate frequency signal, which signal corresponds to a detection object (20) in the detection region, wherein
    the distance signal corresponds to a distance between the detection object and the housing,
    the distance change signal corresponds to a movement speed of the detection object in a direction of the distance,
    and the control unit is designed such that the change in operation mode of the device to be connected downstream can also then take place as reaction to the signals of the signal processing unit, if
    the distance signal lies between a predetermined or adjustable minimum and maximum distance value and/or
    the distance change signal lies between a predetermined or adjustable minimum and maximum distance change value.

3. The device according to one of claims 1 or 2, **characterised in that** the housing is designed for ceiling and/or wall mounting in an external region, in particular an external region of a building.

4. The device according to one of claims 1 to 3, **characterised in that** the electrical device, in particular lighting device, is integrated in the housing or is located, preferably detachably, at the housing.

5. The device according to one of claims 1 to 4, **characterised in that** the electrical device is a lighting device and has a plurality of light-emission surfaces, preferably achieved by opposing housing walls and/or housing flat sides.

6. The device according to one of claims 2 to 5, **characterised by** setting up and/or configuration means (26) which are designed to adjust and/or change the minimum and/or maximum distance value, the minimum and/or maximum distance change value and/or the minimum and/or maximum angle change speed, more preferably wirelessly and/or provided for operation in an assembled state of the external sensor device.

7. The device according to one of claims 1 to 6, **characterised in that** the control unit is designed to activate a plurality of spatially separated foreseeable and/or wirelessly interconnected lighting devices.

8. A movement sensor-controlled outer light, having the external sensor device according to one of claims 1 to 7.

**Revendications**

1. Dispositif à capteur extérieur pour l'activation commandée par mouvement d'un dispositif électrique, en particulier d'un dispositif de luminaire (10), avec des moyens détecteurs haute fréquence Doppler formés pour la détection de mouvement et une unité de commande (24) montée en aval de ceux-ci et commandant l'activation sous la forme d'une variation de mode de fonctionnement du dispositif à monter en aval, dans lequel les moyens détecteurs haute fréquence Doppler (12) comportent une paire d'antennes de réception HF (14a, 16a) dirigées vers une zone de détection commune (22) et espacées l'une de l'autre d'une distance prédéfinie (S) dans un boîtier commun, avec des moyens mélangeurs (14m, 16m) associés respectivement pour produire des premier et deuxième signaux de fréquence intermédiaire (OUT A,OUT B), **caractérisé en ce que**
il est prévu, en aval des moyens mélangeurs, une unité de traitement de signaux (18) qui est formée pour produire à partir des premier et deuxième signaux de fréquence intermédiaire, par traitement numérique de signaux, un signal angulaire et un signal de variation d'angle correspondant à un objet de détection (20) dans la zone de détection, dans lequel
le signal angulaire correspond à un angle de position de l'objet de détection dans un plan de mouvement de l'objet de détection, en particulier la surface du sol dans un état monté du dispositif à capteur extérieur,
et le signal de variation angulaire correspond à une vitesse angulaire de l'objet de détection dans le plan de mouvement,
et l'unité de commande est formée de telle sorte qu'en réaction aux signaux de l'unité de traitement de signaux la variation de mode de fonctionnement du dispositif à monter en aval ait lieu lorsque
le signal de variation angulaire est situé entre des vitesses angulaires minimale et maximale prédéfinies ou réglables.

2. Dispositif à capteur extérieur selon la revendication 1, dans lequel
dans les moyens mélangeurs est injecté un signal d'oscillateur d'un oscillateur local qui est modulé en signaux carrés avec une période $T_S$ par une unité de modulateur montée en aval et qui est commuté entre des première ($f_1$) et deuxième ($f_2$) fréquences,
l'unité de traitement de signaux (18) est formée en supplément pour produire à partir des premier et deuxième signaux de fréquence intermédiaire, par traitement numérique de signaux, un signal de distance et de variation de distance correspondant à un objet de détection (20) dans la zone de détection, dans lequel
le signal de distance correspond à une distance entre l'objet de détection et le boîtier,
le signal de variation de distance correspond à une vitesse de mouvement de l'objet de détection dans une direction de la distance,
et l'unité de commande est formée de telle sorte qu'en réaction aux signaux de l'unité de traitement de signaux la variation de mode de fonctionnement du dispositif à monter en aval puisse aussi avoir lieu lorsque
le signal de distance est situé entre des valeurs de distance minimale et maximale prédéfinies ou réglables et/ou
le signal de variation de distance est situé entre des valeurs de variation de distance minimale et maximale prédéfinies ou réglables.

**3.** Dispositif selon l'une des revendications 1 ou 2, **caractérisé en ce que** le boîtier est formé pour un montage au plafond et/ou au mur dans une zone extérieure, en particulier une zone extérieure d'un bâtiment.

**4.** Dispositif selon l'une des revendications 1 à 3, **caractérisé en ce que** le dispositif électrique, en particulier le dispositif de luminaire, est intégré dans le boîtier ou est appliqué, de préférence de manière amovible, sur le boîtier.

**5.** Dispositif selon l'une des revendications 1 à 4, **caractérisé en ce que** le dispositif électrique est un dispositif de luminaire et présente une multiplicité de surfaces de sortie de lumière, réalisées de préférence par des parois de boîtier et/ou côtés plats de boîtier opposés.

**6.** Dispositif selon l'une des revendications 2 à 5, **caractérisé par** des moyens d'installation et/ou de configuration (26) qui sont formés pour régler et/ou modifier les valeurs de distance minimale et/ou maximale, les valeurs de variation de distance minimale et/ou maximale et/ou les vitesses de variation angulaire minimale et/ou maximale, de préférence sans fil et/ou prévus pour un fonctionnement dans un état de montage du dispositif à capteur extérieur.

**7.** Dispositif selon l'une des revendications 1 à 6, **caractérisé en ce que** l'unité de commande est formée pour activer une multiplicité de dispositifs de luminaires aptes à être prévus espacés les uns des autres dans l'espace et/ou reliés entre eux sans fil.

**8.** Luminaire extérieur commandé par capteur de mouvement, comportant le dispositif à capteur extérieur selon l'une des revendications 1 à 7.

**Fig. 1**

# Fig. 2

# Fig. 3

OUT A          OUT B

```
              44
          A/D-Wandler
              46
          Demodulator
```

UA1    UA2    UB1    UB2

Phase A1                              Phase B1

```
              48
        Spektralanalyse
       (Modelle der Signale)
```

Phase A2                              Phase B2

IFA1    IFA2    IFB1    IFB2

```
        60  Auswerteeinheit
       (Statistische Auswertung)
```

```
              50
      Bestimmungseinheit für
  Radialgeschwindigkeit,  Abstand, Azimute
```

```
              72                              74
       Kalman-Filter für den          Kalman-Filter für den
         Abstand und die               Azimut und  die
      Radialgeschwindigkeit        Winkelgeschwindigkeit
```

Varianz des                                              Varianz des
Abstandes und                                            Azimutes und
der Radial-                                              der Winkelgeschwindigkeit                                          geschwindigkeit

```
              80
        Entscheidungseinheit
```

```
              90
        Parameter- und               10
      Schwellwerteinheit
```

# Fig. 4

$IF_{A1}$
$IF_{A2}$

$IF_{B1}$
$IF_{B2}$

$s$

A   $f_1, f_2$   B   16a

14a

$V_R = \dfrac{dR}{dt}$

$\Omega = \dfrac{d\varphi}{dt}$

$R_A = R - R'$

$s = 0.02584\,m = \dfrac{c}{2 * 5,8E9}$

$c = 299792458\ ms^{-1}$

$R$

$R \gg s$

$R_B = R + R'$

$-\dfrac{\pi}{2} \le \varphi \le \dfrac{\pi}{2}$

$R' = \dfrac{s}{2}\sin\varphi$

$\varphi$

$R'$

$R'$

$V_R$

## Fig. 6

OUT

| A/D-Wandler | ~ 44' |
|---|---|
| Demodulator | ~ 46' |

48'

Ψ₁    U1          U2    Ψ₂

| Spektralanalyse Modelle der Signale |
|---|

IF1               IF2

| Statistische Auswertung | ⟩ 60' |
|---|---|

| Radialgeschwindigkeit, Abstand | ⟩ 50' |
|---|---|

| Kalman-Filter für den Abstand und die Radialgeschwindigkeit | ⟩ 72 |
|---|---|

Varianz des
Abstandes und
der Radial-
Geschwindigkeit

| Entscheidungskriterium | ⟩ 80 |
|---|---|

| Parametern und Schwelle |
|---|

⊗ ~ 10

90'

Fig. 5

Fig. 7

UA    UB

$\Psi_A$    $\Psi_B$

Spektralanalyse
Modelle der Signale    48''

IFA    IFB

Statistische Auswertung    60''

Azimute

50''

Kalman-Filter für den
Azimut und die
Winkelgeschwindigkeit    74

Varianz des
Azimutes und
der Winkel-
Geschwindigkeit

Entscheidungskriterium    80

Parametern und
Schwelle    90    10

Fig. 8

# Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100103020 A1
- WO 2012023087 A1